(19) Europäisches Patentamt / European Patent Office / Office européen des brevets

(11) **EP 4 755 589 A1**

(12) **EUROPEAN PATENT APPLICATION**
published in accordance with Art. 153(4) EPC

(43) Date of publication:
**10.06.2026 Bulletin 2026/24**

(21) Application number: **24922454.4**

(22) Date of filing: **26.12.2024**

(51) International Patent Classification (IPC):
**B25J 9/00** *(2006.01)*    **B25J 9/16** *(2006.01)*

(52) Cooperative Patent Classification (CPC):
**B25J 9/00; B25J 9/16**

(86) International application number:
**PCT/KR2024/021172**

(87) International publication number:
**WO 2025/164945 (07.08.2025 Gazette 2025/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2024   KR 20240016582
19.04.2024   KR 20240052504**

(71) Applicant: **Samsung Electronics Co., Ltd.
Suwon-si, Gyeonggi-do 16677 (KR)**

(72) Inventors:
• **YU, Jungpil
  Suwon-si Gyeonggi-do 16677 (KR)**
• **SONG, Sukhoon
  Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **WEARABLE DEVICE FOR CONTROLLING TIME DELAY PARAMETERS USED FOR TORQUE OUTPUT DELAY, AND OPERATION METHOD THEREOF**

(57)    This wearable device may: acquire a joint angle value of a user by using an angle sensor, determine a stride time value of the user on the basis of the acquired joint angle value; determine a delay value related to a delay in torque output of a driving module on the basis of at least one of a target value related to the ideal change timing of the torque rotation direction of the driving module, the determined stride time value, and a gain value related to the torque strength of the driving module; and control the driving module such that torque is output from the driving module with a delay corresponding to the determined delay value.

Wearable device 600

Driving module 630 — Processor 610 — Angle sensor 620

FIG. 6

EP 4 755 589 A1

## Description

### Technical Field

Certain example embodiments relate to a wearable device for controlling a time delay parameter used to delay a torque output and/or a method of operating the wearable device.

### Background Art

An assistance device may refer to a device and/or apparatus that helps a user perform an exercise or movement. The assistance device may be worn on the body of the user and may provide the user with the power necessary to perform an exercise or movement.

### Disclosure of the Invention

### Technical Goals

According to an example embodiment, a wearable device for controlling a time delay parameter (e.g., a delay value) used to delay a torque output may be provided.

According to an example embodiment, a wearable device may include a driving module comprising a a motor and/or circuitry, an angle sensor (which may or may not be part of the driving module), and a processor comprising processing circuitry. The processor may be configured to obtain a joint angle value of a user using the angle sensor, determine a stride time value of the user, based on the obtained joint angle value, determine a delay value related to a delay in a torque output of the driving module, based on at least one of a target value related to an ideal timing for changing a torque rotation direction of the driving module, the determined stride time value, and/or a gain value related to a torque intensity of the driving module, and control the driving module such that a torque is delayed by the determined delay value and output from the driving module.

According to an example embodiment, a method of operating a wearable device may include obtaining a joint angle value of a user, determining a stride time value of the user, based on the obtained joint angle value, determining a delay value related to a delay in a torque output of a driving module, based on at least one of a target value related to an ideal timing for changing a torque rotation direction of the driving module of the wearable device, the determined stride time value, and/or a gain value related to a torque intensity of the driving module, and outputting a torque by delaying the torque by the determined delay value.

### Brief Description of the Drawings

The above and other aspects, features, and advantages of certain example embodiments will be more apparent from the following detailed description, taken in conjunction with the accompanying drawings, in which:

FIG. 1A is a diagram illustrating an overview of a wearable device worn on a body of a user, according to an example embodiment;
FIG. 1B is a diagram illustrating an example of a system including a wearable device, according to an example embodiment;
FIG. 2A is a rear schematic view of a wearable device according to an example embodiment;
FIG. 2B is a left side view of a wearable device according to an example embodiment;
FIGS. 3A and 3B are block diagrams illustrating examples of a configuration of a wearable device, according to an example embodiment;
FIG. 4 is a diagram illustrating an interaction between a wearable device and an electronic device, according to an example embodiment;
FIG. 5 is a diagram illustrating an example of an operation of a wearable device, according to an example embodiment;
FIG. 6 is a diagram illustrating an example of a configuration of a wearable device according to an example embodiment;
FIGS. 7 and 8 are diagrams illustrating examples of counting the number of steps of a user by a wearable device, according to an example embodiment;
FIG. 9 is a diagram illustrating an example of determining a stride time of a user by a wearable device, according to an example embodiment;
FIGS. 10 and 11 are diagrams illustrating examples of a timing index of a wearable device, according to an example embodiment;

FIGS. 12 and 13 are diagrams illustrating other examples of a timing index of a wearable device, according to an example embodiment;

FIGS. 14 and 15 are diagrams illustrating examples of determining a delay value by a wearable device, according to an example embodiment; and

FIG. 16 is a flowchart illustrating a method of operating a wearable device, according to an example embodiment.

## Best Mode for Carrying Out the Invention

The following detailed structural or functional description is provided as an example only and various alterations and modifications may be made to embodiments. Accordingly, the embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, and similarly the second component may also be referred to as the first component.

It should be noted that if one component is described as being "connected", "coupled", or "joined" to another component, at least a third component may be "connected", "coupled", and "joined" between the first and second components, although the first component may be directly connected, coupled, or joined to the second component. Thus, for example, "connected" as used herein covers both direct and indirect connections.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, the embodiments will be described in detail with reference to the accompanying drawings. When describing the embodiments with reference to the accompanying drawings, like reference numerals refer to like elements and a repeated description related thereto will be omitted.

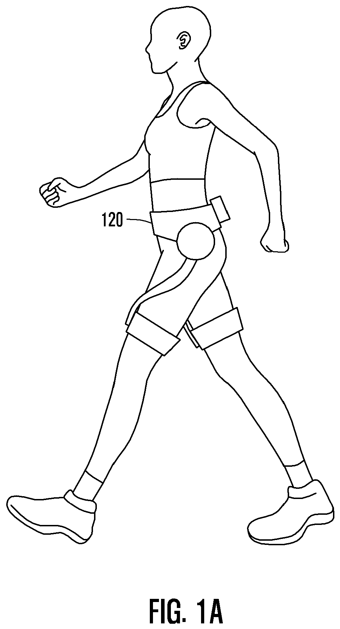

FIG. 1A is a diagram illustrating an overview of a wearable device worn on a body of a user, according to an embodiment.

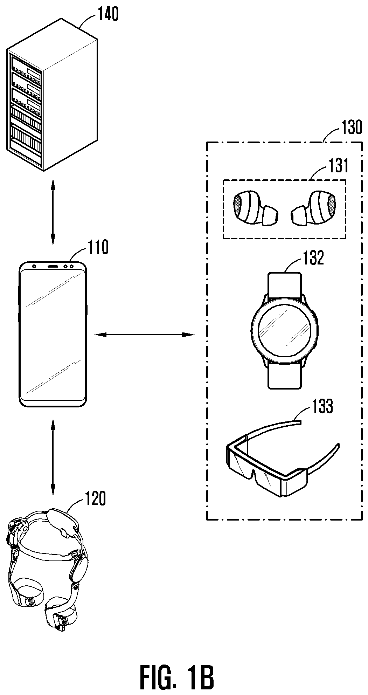

Referring to FIG. 1, a wearable device 120 may be a device worn on a body of a user to assist the user in walking, exercising, and/or working. In embodiments, the term "wearable device" may be replaced with "wearable robot," "walking assistance device," or "exercise assistance device". The user may be a human or an animal, but is not limited thereto. The wearable device 120 may be worn on a body (e.g., a lower body (the legs, ankles, knees, etc.), an upper body (the torso, arms, wrists, etc.), or the waist) of the user to provide an external force such as an external force (e.g., an assistance force and/or a resistance) force to a body motion of the user. The assistance force may be a force applied in the same direction as the body motion direction of the user, and the resistance force may be a force applied in a direction opposite to the body motion direction of the user. The term "resistance force" may also be referred to as "exercise load".

When the wearable device 120 performs a walking assist function to assist the user in walking, the wearable device 120 may assist a portion or entirety of a leg of the user by providing an assistance force to the body of the user, thereby assisting the user in walking. The wearable device 120 may enable the user to walk independently or to walk for a long time by providing a force required for the user to walk, thereby extending the walking ability of the user. The wearable device 120 may help in improving an abnormal walking habit or walking posture of a walker.

When the wearable device 120 performs an exercise function to enhance the exercise effect of the user, the wearable device 120 may hinder a body motion of the user or provide resistance to a body motion of the user by providing a resistance force to the body of the user. When the wearable device 120 is, for example, a hip-type wearable device, the wearable device 120 may provide an exercise load to a body motion of the user while being worn on the legs, thereby enhancing the exercise effect of the user. The user may perform a walking motion while wearing the wearable device 120 for exercise. In this case, the wearable device 120 may apply a resistance force to the leg motion during the walking motion of the user.

In various embodiments, an example of a hip-type wearable device 120 that is worn on the waist and legs is described for ease of description. However, as described above, the wearable device 120 may be worn on another body part (e.g., the upper arms, lower arms, hands, calves, and feet) other than the waist and legs (particularly, the thighs), and the shape and configuration of the wearable device 120 may vary depending on the body part on which the wearable device 120 is worn.

FIG. 1B is a diagram illustrating an example of a system including a wearable device, according to an embodiment.

Referring to FIG. 1B, an electronic device 110 may communicate with the wearable device 120 and remotely control the wearable device 120. The electronic device 110 may be various types of devices. The electronic device 110 may include, for example, a portable communication device (e.g., a smartphone), a computer device, a portable multimedia device, or a home appliance, but is not limited thereto.

According to an embodiment, the electronic device 110 and/or the wearable device 120 may be connected to another wearable device 130. For example, the wearable device 120, the electronic device 110, and the other wearable device 130 may be connected to each other through a wireless communication link (e.g., a Bluetooth communication link). The other wearable device 130 may include, for example, wireless earphones 131, a smart watch 132, or smart glasses 133, but is not limited thereto. The smart watch 132 may be a watch-type wearable device (or a watch-type electronic device), and the smart glasses 133 may be an eyewear-type wearable device (or an eyewear-type electronic device).

In an embodiment, the smart watch 132 may control the wearable device 120. When the smart watch 132 is connected to the electronic device 110 through a wireless communication link, and the electronic device 110 is connected to the wearable device 120 through a wireless communication link, the smart watch 132 may control the wearable device 120 through the electronic device 110. Embodiments are not limited thereto, and the smart watch 132 may be directly connected to the wearable device 120 and control the wearable device 120.

In an embodiment, the electronic device 110 may transmit, to the other wearable device 130, a control signal to instruct to provide a user with feedback corresponding to a state of the wearable device 120. The other wearable device 130 may provide (or output) feedback (e.g., at least one of visual feedback, auditory feedback, or haptic feedback) corresponding to the state of the wearable device 120 in response to the reception of the control signal.

In an embodiment, the electronic device 110 may communicate with a server 140 using short-range wireless communication (e.g., wireless-fidelity (Wi-Fi)) or mobile communication (e.g., fourth generation (4G), 5G, etc.).

In an embodiment, the electronic device 110 may receive profile information of the user from the user. The profile information may include, for example, at least one of the age, gender, height, weight, or body mass index (BMI), or a combination thereof. The electronic device 110 may transmit the profile information of the user to the server 140.

In an embodiment, the electronic device 110 and/or the wearable device 120 may request the user to perform one or more target motions to determine (or check) the exercise ability of the user. The one or more target motions may include, for example, a knee lift, a backward leg stretch, etc. A knee lift may be an exercise (or motion) in which the user starts in a standing position with both feet on the ground, raises the knees as high as possible without bending at the waist, and then returns to the standing position. A backward leg stretch may be an exercise (or motion) in which the user starts in a standing position with the hands on a wall, raises a leg backward as far as possible without bending at the waist, and then returns to the standing position.

In an embodiment, the wearable device 120 may obtain motion information of the user performing a target motion using a sensor (e.g., an inertial measurement unit (IMU)), and transmit the obtained motion information to the electronic device 110. The electronic device 110 may transmit the obtained motion information to the server 140.

In an embodiment, the server 140 may determine a target amount of exercise of the user for each of the exercise types (e.g., strength training, balance exercise, and aerobic exercise) through the profile information and motion information received from the electronic device 110. The server 140 may transmit the target amount of exercise for each exercise type to the electronic device 110.

In an embodiment, the server 140 may include a database in which information about a plurality of exercise programs to be provided to the user through the wearable device 120 is stored. For example, the server 140 may manage a user account of the user of the electronic device 110 or the wearable device 120. The server 140 may store and manage a workout program performed by the user and a result of performance with respect to the workout program in link with the user account.

In an embodiment, the electronic device 110 and/or the server 140 may provide the user with various exercise programs to achieve an exercise goal in various exercise environments desired by the user. The exercise goal may include, for example, at least one of muscle strength improvement, physical strength improvement, cardiovascular endurance improvement, core stability improvement, flexibility improvement, or symmetry improvement, or a combination thereof.

In an embodiment, the electronic device 110 and/or the server 140 may recommend exercise programs to the user to achieve the exercise goal of the user. Each exercise program may include one or more exercise modes. For example, each exercise mode may be about a body motion to achieve a predetermined exercise goal. For example, running may be an exercise mode for improving the cardiovascular endurance of the user. For example, a lunge may be an exercise mode for improving the core stability of the user. A combination of a plurality of exercise modes forming each exercise program may vary according to the exercise goal of the user. The electronic device 110 may provide the user with various exercise programs according to the combination of the plurality of exercise modes, even for the same exercise goal.

In an embodiment, the plurality of exercise modes may be stored in the electronic device 110 or the server 140 as a database. The electronic device 110 or the server 140 may generate the plurality of exercise programs based on a variety of information about the user and recommend a target exercise program among the plurality of exercise programs to the user in consideration of the exercise goal or an exercise performance state of the user. For example, the electronic device 110 or the server 140 may determine the target exercise program to recommend to the user based on at least one of the exercise goal, an exercise history, or an exercise performance result of the user. Accordingly, a new exercise program may be recommended to the user even if the user performs an exercise every day under the same exercise goal, and the user may feel like performing a different exercise from the previous exercise by performing the new exercise program.

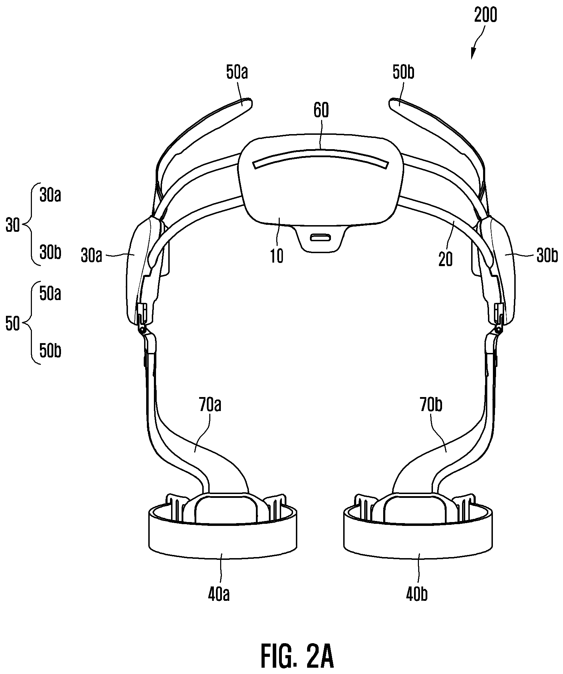

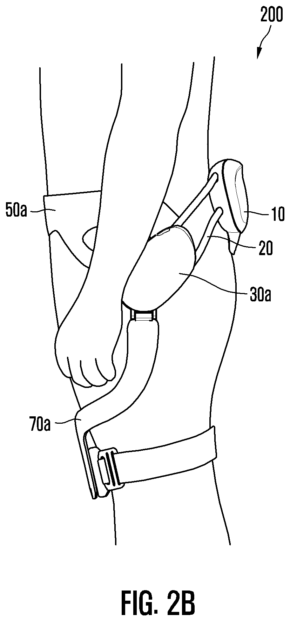

FIG. 2A is a rear schematic view of a wearable device according to an embodiment. FIG. 2B is a left side view of a wearable device according to an embodiment.

A wearable device 200 shown in FIGS. 2A and 2B may be an example of the wearable device 120.

Referring to FIG. 2A, the wearable device 200 according to an embodiment may include a lumbar support module 10, a lumbar frame 20, a driving module 30, thigh fastening portions 40a and 40b, a main belt 50, and thigh frames 70a and 70b.

According to an embodiment, the lumbar support module 10 may be positioned on the lumbar region (lower back area) of the user while the user is wearing the wearable device 200. The lumbar support module 10 may be mounted on the lumbar region of the user to provide a cushioning feeling to the waist of the user and support the waist of the user. The lumbar support module 10 may be hung on the hip region (an area of the hips) to prevent or reduce chances of the wearable device 200 from being downwardly separated due to gravity while the user is wearing the wearable device 200. The lumbar support module 10 may distribute some of the weight of the wearable device 200 to the waist of the user while the user is wearing the wearable device 200. The lumbar support module 10 may be connected, directly or indirectly, to the lumbar frame 20. Connecting elements (not shown) that may be connected to the lumbar frame 20 may be formed at both end portions of the lumbar support module 10.

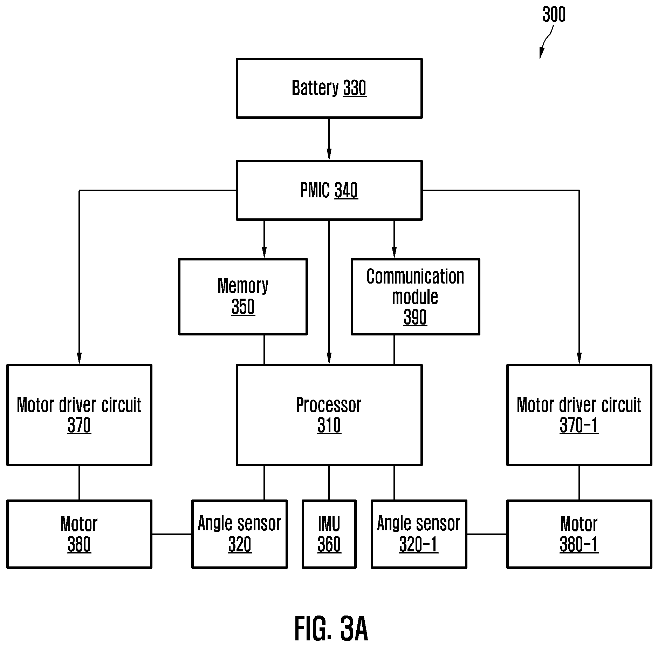

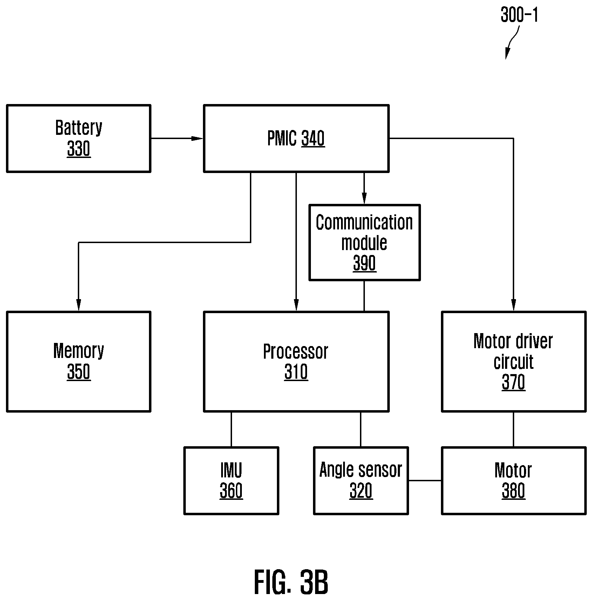

According to an embodiment, the lumbar support module 10 may include a lighting unit 60. The lighting unit 60 may include a plurality of light sources (e.g., light-emitting diodes (LEDs)). The lighting unit 60 may emit light by control of a processor (e.g., a processor 310 of FIGS. 3A and 3B described below). According to embodiments, the processor may control the lighting unit 60 such that visual feedback corresponding to the state of the wearable device 200 (e.g., a booting state, a sensing state, etc.) may be provided (or output) to the user through the lighting unit 60.

According to an embodiment, the lumbar frame 20 may extend from both end portions of the lumbar support module 10. The lumbar region of the user may be accommodated inside the lumbar frame 20. The lumbar support frame 20 may include at least one rigid body beam. Each beam may be in a curved shape having a preset curvature to enclose the lumbar region of the user. The main belt 50 may be connected, directly or indirectly, to an end portion of the lumbar frame 20. The driving module 30 may be mounted on the lumbar frame 20. The lumbar frame 20 may include a connector (not shown) for mounting the driving module 30 thereon.

According to an embodiment, the driving module 30 may include a first driving module 30a positioned on the left side of the user while the user is wearing the wearable device 200, and a second driving module 30b positioned on the right side of the user while the user is wearing the wearable device 200.

According to an embodiment, the first driving module 30a may include a first angle sensor (e.g., a first encoder or a first Hall sensor) for measuring the angle (e.g., a left hip joint angle) of a first joint of the user. The second driving module 30b may include a second angle sensor (e.g., a second encoder or a second Hall sensor) for measuring the angle (e.g., a right hip joint angle) of a second joint of the user.

According to an embodiment, the first driving module 30a and the second driving module 30b may generate a torque. The first driving module 30a may be connected, directly or indirectly, to the first thigh frame 70a and the second driving module 30b may be connected, directly or indirectly, to the second thigh frame 70b. The first driving module 30a may provide the generated torque to the left leg of the user through the first thigh frame 70a. The first thigh frame 70a may provide an external force to the left leg of the user by rotating through the torque generated by the first driving module 30a. The second driving module 30b may provide the generated torque to the right leg of the user through the second thigh frame 70b. The second thigh frame 70b may provide an external force to the right leg of the user by rotating through the torque generated by the second driving module 30b.

According to an embodiment, the thigh frames 70a and 70b may support the legs (e.g., thighs) of the user when the wearable device 200 is worn on the legs of the user. The thigh frames 70a and 70b may include the first thigh frame 70a for supporting the left leg of the user and the second thigh frame 70b for supporting the right leg of the user.

According to an embodiment, the thigh frames 70a and 70b may transmit a torque generated by, for example, the driving modules 30a and 30b to the thighs of the user. As one end portions of the thigh frames 70a and 70b are connected to the driving modules 30a and 30b to rotate, and the other end portions of the thigh frames 70a and 70b are connected to the thigh fastening portions 40a and 40b, the thigh frames 70a and 70b may transmit the torques generated by the driving modules 30a and 30b to the thighs of the user while supporting the thighs of the user. For example, the thigh frames 70a and 70b may push or pull the thighs of the user. The thigh frames 70a and 70b may extend in the longitudinal direction of the thighs of the user. The thigh frames 70a and 70b may be bent to surround at least a portion of the circumferences of the thighs of the user. Each "driving module" herein may include a motor and/or drive circuitry, and optionally an angle sensor. The angle sensor may or may not be part of the driving module in various example embodiments.

According to an embodiment, the thigh fastening portions 40a and 40b may be connected, directly or indirectly, to the thigh frames 70a and 70b and may fasten the thigh frames 70a and 70b to the thighs. The thigh fastening portions 40a and 40b may include the first thigh fastening portion 40a for fastening the first thigh frame 70a to the left thigh of the user and a second thigh fastening portion 40b for fastening the second thigh frame 70b to the right thigh of the user.

According to an embodiment, the first thigh fastening portion 40a may include a first cover, a first fastening frame, and a first strap, and the second thigh fastening portion 40b may include a second cover, a second fastening frame, and a second strap. The first cover and the second cover may be arranged on one sides of the thighs of the user. The first cover and the second cover may be arranged on the front surfaces of the thighs of the user. The first cover and the second cover may be arranged in the circumferential directions of the thighs of the user. The first cover and the second cover may extend to both sides from the other end portions of the thigh frames 70a and 70b and may include curved surfaces corresponding to the thighs of the user. One ends of the first cover and the second cover may be connected, directly or indirectly, to the fastening frames, and the other ends thereof may be connected, directly or indirectly, to the straps.

According to an embodiment, the first fastening frame and the second fastening frame may be arranged, for example, to surround at least some portions of the circumferences of the thighs of the user, thereby preventing or reducing chances of the thighs of the user from being separated from the thigh frames 70a and 70b. The first fastening frame may have a fastening structure that connects the first cover and the first strap, and the second fastening frame may have a fastening structure that connects the second cover and the second strap.

According to an embodiment, the first strap may enclose the remaining portion of the circumference of the left thigh of the user that is not covered by the first cover and the first fastening frame, and the second strap may enclose the remaining portion of the circumference of the right thigh of the user that is not covered by the second cover and the second fastening frame. The first strap and the second strap may include, for example, an elastic material (e.g., a band).

According to an embodiment, the main belt 50 may be connected, directly or indirectly, to the lumbar frame 20. The main belt 50 may include a first main belt 50a configured to enclose the left abdomen of the user while the user is wearing the wearable device 200, and a second main belt 50b configured to enclose the right abdomen of the user while the user is wearing the wearable device 200. The first main belt 50a may be formed in a shape having a longer length than the second main belt 50b, but is not limited thereto, and the first main belt 50a may be formed in a shape having the same length as or a shorter length than the second main belt 50b. The first main belt 50a and the second main belt 50b may be connected, directly or indirectly, to both end portions of the lumbar frame 20, respectively. The main belt 50 may be bent in a direction to surround the abdomen of the user when the body of the user is inserted in such a direction that it is accommodated in the wearable device 200. The first main belt 50a and the second main belt 50b may be connected to each other while the user is wearing the wearable device 200. The main belt 50 may distribute a portion of the weight of the wearable device 200 to the abdomen of the user while the user is wearing the wearable device 200.

Referring to FIG. 2B, the lumbar support module 10 may be mounted on the back of the lumbar region of the user and be hung on the hip region of the user, thereby supporting some of the weight of the wearable device 200. The first driving module 30a may be arranged on the left lumbar region of the user. The lumbar frame 20 may extend from an end portion of the lumbar support module 10 and be inclined in a direction toward the first driving module 30a. The first main belt 50a mounted on the lumbar frame 20 may surround the left abdomen of the user.

FIGS. 3A and 3B are block diagrams illustrating examples of a configuration of a wearable device, according to an embodiment.

According to an embodiment, a wearable device 300 of FIG. 3A may include a processor 310, angle sensors 320 and 320-1, a battery 330, a power management integrated circuit (PMIC) 340, a memory 350, an IMU 360, motor driver circuits 370 and 370-1, motors (or actuators) 380 and 380-1, and a communication module 390.

Although the plurality of angle sensors 320 and 320-1, the plurality of motor driver circuits 370 and 370-1, and the plurality of motors 380 and 380-1 are shown in FIG. 3, which is merely an example, the wearable device 300-1 in the example shown in FIG. 3B may include a single angle sensor 320, a single motor driver circuit 370, and a single motor 380. Also, according to the implementation, the wearable devices 300 and 300-1 may include a plurality of processors. The number of motor driver circuits, the number of motors, or the number of processors may vary depending on a body part on which the wearable devices 300 and 300-1 are worn.

The wearable device 300 in FIG. 3A and the wearable device 300-1 of FIG. 3B may be examples of the wearable device 120 and the wearable device 200.

According to an embodiment, the angle sensor 320, the motor driver circuit 370, and the motor 380 may be included in the first driving module 30a of FIG. 2A, and the angle sensor 320-1, the motor driver circuit 370-1, and the motor 380-1 may be included in the second driving module 30b of FIG. 2A.

According to an embodiment, the angle sensor 320 and the angle sensor 320-1 may each correspond to a Hall sensor, but are not limited thereto.

According to an embodiment, the angle sensor 320 may measure or sense the angle of the first thigh frame 70a (or the angle of the first joint (e.g., left hip joint, etc.) of the user). The angle sensor 320 may transmit the measurement result (e.g., an angle value of the angle of the first thigh frame 70a) to the processor 310.

According to an embodiment, the angle sensor 320-1 may measure or sense the angle of the second thigh frame 70b (or the angle of the second joint (e.g., right hip joint) of the user). The angle sensor 320 may transmit the measurement result (e.g., an angle value of the angle of the second thigh frame 70b) to the processor 310.

According to an embodiment, the angle sensor 320 and the angle sensor 320-1 may additionally measure the knee angles and ankle angles of the user according to the positions of the angle sensor 320 and the angle sensor 320-1.

According to an embodiment, the wearable devices 300 and 300-1 may include a potentiometer. The potentiometer may sense an R-axis joint angle, an L-axis joint angle, an R-axis joint angular velocity, and an L-axis joint angular velocity according to a walking motion of the user. In this example, the R and L axes may be reference axes for the right leg and the left leg of the user, respectively. For example, the R/L axis may be set to be vertical to the ground and set such that a front side of a body of a person has a negative value and a rear side of the body has a positive value.

According to an embodiment, the PMIC 340 may charge the battery 330 using power supplied from an external power source. For example, the external power source and the wearable devices 300 and 300-1 may be connected through a cable (e.g., a universal serial bus (USB) cable, etc.). The PMIC 340 may receive power from the external power source through the cable, and charge the battery 330 using the received power. According to embodiments, the PMIC 340 may charge the battery 330 through a wireless charging method.

According to an embodiment, the PMIC 340 may transmit power stored in the battery 330 to a component (e.g., the processor 310, the memory 350, the IMU 360, the communication module 390, etc.) in the wearable devices 300 and 300-1. The PMIC 340 may, for example, adjust the power stored in the battery 330 to a voltage or current level suitable for the components in the wearable device 300. The PMIC 340 may include, for example, a converter (e.g., a direct current (DC)-DC converter) or a regulator (e.g., a low-dropout (LDO) regulator or a switching regulator) configured to perform the adjustment described above.

According to an embodiment, the PMIC 340 may determine state information (e.g., a state of charge, a state of health, an overvoltage, a low voltage, an overcurrent, an overcharge, an overdischarge, an overheating, a short circuit, or a swelling) of the battery 330, and transmit the state information of the battery 330 to the processor 310. The processor 310 may control to provide the state information of the battery 330 to the user. For example, the processor 310 may output the status information of the battery 330 through at least one of a sound output module (e.g., a speaker), a vibration output module (e.g., a vibration motor or a haptic motor), or a display module (e.g., a display or the lighting unit 60). For example, the processor 310 may transmit the state information of the battery 330 to the electronic device 110 through the communication module 390, and the electronic device 110 may display the state information of the battery 330 on the display.

According to an embodiment, the IMU 360 may obtain motion information of the wearable devices 300 and 300-1 (or the user). For example, the IMU 360 may obtain rotation angle values (e.g., an angle value of an X rotation angle, an angle value of a Y rotation angle, and an angle value of a Z rotation angle) of the lumbar support module 10 (or the user). The X rotation angle may be, for example, an angle at which the lumbar support module 10 rotates about the X-axis, the Y rotation angle may be, for example, an angle at which the lumbar support module 10 rotates around the Y-axis, and the Z rotation angle may be, for example, an angle at which the lumbar support module 10 rotates around the Z-axis. The IMU 360 may transmit the obtained motion information (e.g., rotation angle values) to the processor 310. Depending on the implementation, the IMU 360 may, for example, obtain three-axis (e.g., X-axis, Y-axis, Z-axis) acceleration values and angular acceleration values of the lumbar support module 10 (or the user) and may transmit the obtained acceleration values and angular acceleration values to the processor 310. The processor 310 may determine rotation angle values of the lumbar support module 10 (or the user) based on at least some of the obtained acceleration values and the angular acceleration values.

According to an embodiment, the processor 310 may control the overall operation of the wearable devices 300 and 300-1.

According to an embodiment, the processor 310 may be operatively connected, directly or indirectly, to at least one or all of the angle sensors 320 and 320-1, the memory 350, or the IMU.

According to an embodiment, the processor 310 may, for example, control the components (e.g., the motor driver circuits 370 and 370-1, etc.) in the wearable devices 300 and 300-1 by executing software (e.g., a program or instructions) stored in the memory 350, and perform various data processing or computation. As at least a portion of the data processing or computation, the processor 310 may store data received from other components (e.g., the IMU 360, the angle sensors 320 and 320-1, etc.) in the memory 350, and process the instructions or data stored in the memory 350.

According to an embodiment, the motor driver circuits 370 and 370-1 may control the motors 380 and 380-1, respectively, under the control by the processor 310, and each of the motors 380 and 380-1 may generate a torque by this control.

Each "processor" herein includes processing circuitry, and/or may include multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to an embodiment, the communication module 390, comprising communication circuitry, may support the establishment of a direct (or wired) communication channel or a wireless communication channel between the wearable device 300, 300-1 and an external electronic device, and support the communication through the established communication channel. The communication module may include one or more communication processors configured to support direct (or wired) communication or wireless communication. According to an embodiment, the communication module may include a wireless communication module (e.g., a cellular communication module, a short-range wireless communication module, or a global navigation satellite system (GNSS) communication module) or a wired communication module (e.g., a local area network (LAN) communication module or a power line communication (PLC) module). A corresponding one of these communication modules may communicate with the external electronic device via a first network (e.g., a short-range communication network such as Bluetooth™, Wi-Fi direct, or infrared data association (IrDA)) or a second network (e.g., a legacy cellular network, a 5G network, a next-generation communication network, the Internet, or a computer network). These various types of communication modules may be implemented as a single component (e.g., a single chip), or may be implemented as multiple components (e.g., multiple chips) separate from each other.

According to an embodiment, the wearable devices 300 and 300-1 may include a display module. The display module may include, for example, a display and/or a lighting unit (e.g., the lighting unit 60 of FIG. 2A). The processor 310 may control the display module so that the display module may provide visual feedback to the user.

According to an embodiment, the wearable devices 300 and 300-1 may include a sound output module. The sound output module may include, for example, one or more speakers. The processor 310 may control the sound output module so that the sound output module may provide auditory feedback to the user.

According to an embodiment, the wearable devices 300 and 300-1 may include a vibration output module. The vibration output module may include, for example, one or more vibration motors or one or more haptic motors. The processor 310 may control the vibration output module so that the vibration output module may provide tactile feedback (or haptic feedback) to the user.

According to an embodiment, at least one of the processor 310, the battery 330, the PMIC 340, the memory 350, the IMU 360, the communication module 390 comprising communication circuitry, the display module comprising a display, the sound output module, or the vibration output module, or a combination thereof may be positioned in the lumbar support module 10 of FIGS. 2A and 2B. Each "module" herein may comprise circuitry.

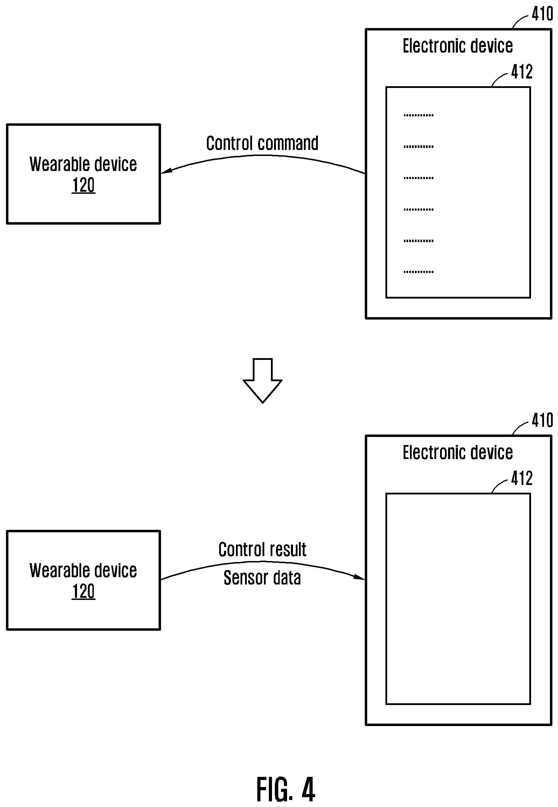

FIG. 4 is a diagram illustrating an interaction between a wearable device and an electronic device, according to an embodiment.

Referring to FIG. 4, the wearable device 120 may communicate with an electronic device 410 (e.g., a smartphone or smartwatch). For example, the electronic device 410 may be a user terminal of the user who uses the wearable device 120 or a controller device dedicated to the wearable device 120. According to an embodiment, the wearable device 120 and the electronic device 410 may be connected to each other through short-range wireless communication (e.g., Bluetooth™ or Wi-Fi communication).

According to an embodiment, the electronic device 410 may verify a state of the wearable device 120 or execute an application to control or operate the wearable device 120. A screen of a user interface (UI) may be displayed to control an operation of the wearable device 120 or determine an operation mode of the wearable device 120 on a display 412 of the electronic device 410 through the execution of the application. The UI may be, for example, a graphical user interface (GUI).

According to an embodiment, the user may input an instruction to control an operation of the wearable device 120 through the GUI screen on the display 212 of the electronic device 410 (e.g., an instruction to instruct the wearable device 120 to operate in an assistance mode of generating an assistance force or an instruction to instruct the wearable device 120 to operate in a resistance mode of generating a resistance force) or change settings of the wearable device 120. The electronic device 410 may generate a control instruction (or control signal) corresponding to an operation control instruction or a setting change instruction input by the user and transmit the generated control instruction to the wearable device 120. The wearable device 120 may operate according to the received control instruction and transmit a control result according to the control instruction and/or sensor data measured by the sensor (e.g., the angle sensors 320 and 320-1 and/or the IMU 360) of the wearable device 120 to the electronic device 410. The electronic device 410 may provide the user with result information (e.g., walking ability information, exercise ability information, or exercise posture evaluation information) derived by analyzing the control result and/or the sensor data through the GUI screen.

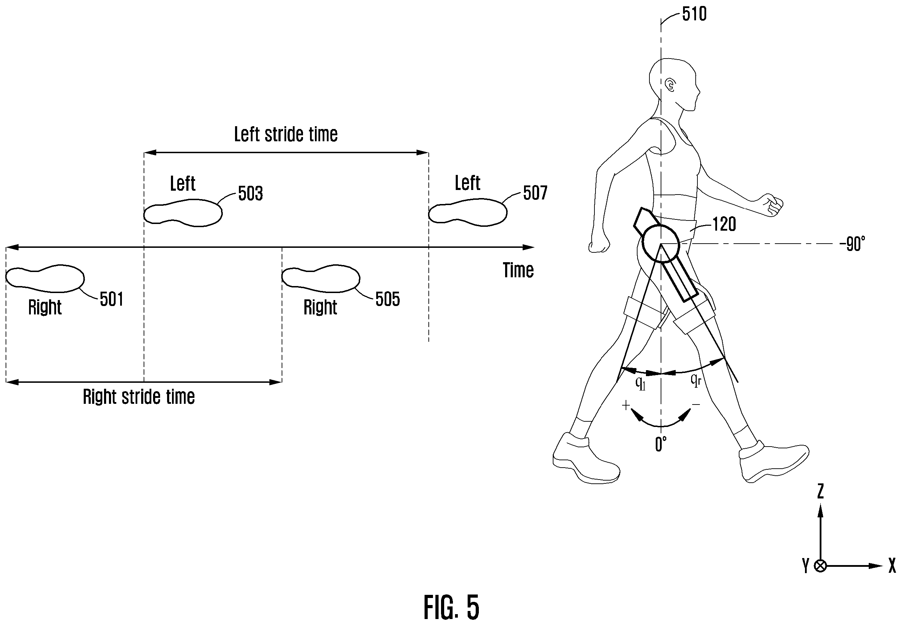

FIG. 5 is a diagram illustrating an example of an operation of a wearable device, according to an embodiment.

FIG. 5 illustrates a first position 501 at a first time point at which the right foot of a user touches the ground, a second position 503 at a second time point at which the left foot of the user touches the ground after the first time point, a third position 505 at a third time point at which the right foot of the user touches the ground again after the second time point, and a fourth position 507 at a fourth time point at which the left foot of the user touches the ground again after the third time point.

In the example illustrated in FIG. 5, the length from the first position 501 at which the right foot of the user touches the ground to the third position 505 at which the right foot of the user touches the ground may correspond to the right stride length of the user, and the difference between the third time point and the first time point may correspond to the right stride time of the user. The length from the second position 503 at which the left foot of the user touches the ground to the fourth position 507 at which the left foot of the user touches the ground may correspond to the left stride length of the user, and the difference between the fourth time point and the second time point may correspond to the left stride time of the user.

In the example illustrated in FIG. 5, one step of the user may be, for example, the motion of a first foot of the user touching the ground and then touching the ground again. For example, the motion of the right foot of the user being in the first position 501 and then in the third position 505 may correspond to one step. The motion of the left foot of the user being in the second position 503 and then in the fourth position 507 may correspond to one step.

As described below, according to an embodiment, the wearable device 120 may count the number of steps of the user, based on a hip joint angle of the user. The number of counted steps may include the number of steps of the left foot and the number of steps of the right foot.

According to an embodiment, a hip joint angle of the user may have a negative number value when the hip joint of the user rotates forward from a line 510 in the gravity direction (or when a leg of the user is in front of the line 510 in the gravity direction). When the hip joint of the user rotates backward from the line 510 in the gravity direction (or when a leg of the user is behind the line 510 in the gravity direction), the hip joint angle of the user may have a positive number value. For example, in the example illustrated in FIG. 5, the right hip joint of the user may be in a state of rotating forward from the line 510 in the gravity direction, so a right hip joint angle $q_r$ may have a negative number value, and the left hip joint of the user may be in a state of rotating backward from the line 510 in the gravity direction, so a left hip joint angle $q_l$ may have a positive number value.

According to an embodiment, the wearable device 120 may measure the left hip joint angle of the user to obtain first raw angle data (e.g., $q_{l\_raw}(t)$) and may measure the right hip joint angle of the user to obtain second raw angle data (e.g., $q_{r\_raw}(t)$).

According to an embodiment, the wearable device 120 (e.g., the processor 310) may filter the first raw angle data and the second raw angle data through a first filter (e.g., a low pass filter). The processor 310 may obtain filtered first raw angle data (e.g., $q_l(t)$) and filtered second raw angle data (e.g., $q_r(t)$). For example, the first filter may be expressed by Equation 1 below. The first filter is not limited to Equation 1 below.

【Equation 1】

$$\bar{x}(t) = (1 - \alpha)\bar{x}(t - 1) + \alpha x(t), \ 0 < \alpha < 1$$

In Equation 1 above, $x(t)$ at a time point $t$ may denote an input (e.g., $q_{l\_raw}(t)$ and $q_{r\_raw}(t)$), $\bar{x}(t\text{-}1)$ may denote a filtering result (e.g., $q_l(t\text{-}1)$ and $q_r(t\text{-}1)$) of the first filter at a previous time point $t\text{-}1$, $\bar{x}(t)$ may denote a filtering result (e.g., $q_l(t)$ and $q_r(t)$) of the first filter at the time point $t$. $\alpha$ in Equation 1 above may denote a coefficient of the first filter.

Filtering by the first filter may remove a high frequency component from the first raw angle data and the second raw angle data.

According to an embodiment, based on Equation 2 below, the wearable device 120 (e.g., the processor 310) may determine a torque value (e.g., $\tau(t)$) used to control the driving module 30.

【Equation 2】

$$y(t) = \sin(q_r(t)) - \sin(q_l(t))$$

$$\tau(t) = \kappa y(t - \triangle t)$$

In Equation 2, $y(t)$ may be, for example, a state factor indicating a state of a movement of the user. For example, the state factor $y(t)$ may be related to the distance (or the angle between the two hip joints) between both legs. $y(t)$ being "0" may indicate a state in which the distance between the legs is "0" (e.g., a crossing state), and the absolute value of $y(t)$

being maximum may indicate a state (e.g., a landing state) in which the angle between the legs is maximum.

According to an embodiment, a gain value $\kappa$ may be a parameter indicating the magnitude and direction of a torque to be output.

As the value of the gain $\kappa$ increases, the magnitude of the torque to be output may increase. If the gain $\kappa$ is, for example, a negative number, a torque (or a resistance torque) acting as a resistance force may be output to the user, and if the gain $\kappa$ is, for example, a positive number, a torque (or an assistance torque) acting as an assistance force may be output to the user.

The delay value $\triangle t$ may be used to delay a torque output. The gain value $\kappa$ and the delay value $\triangle t$ may be preset. The gain value $\kappa$ and the delay value $\triangle t$ may be controllable by the user, the wearable device 120, or an electronic device (e.g., a smartphone, a tablet personal computer (PC)) paired with the wearable device 120. The delay value $\triangle t$ may remain the same, for example, while the user exercises. However, embodiments are not limited thereto, and as described below, the wearable device 120 may adjust or change the delay value $\triangle t$.

According to an embodiment, the wearable device 120 (e.g., the processor 310) may determine, through Equation 3 below, a torque value (e.g., $\tau_r(t)$) that may be used to generate a torque in the motor 380-1 and a torque value (e.g., $\tau_l(t)$) that may be used to generate a torque in the motor 380.

【Equation 3】

$$\tau_r(t) = \tau(t)$$
$$\tau_l(t) = -\tau(t)$$

$\tau_r(t)$ and $\tau_l(t)$ may be values with the same magnitude and opposite torque directions.

The wearable device 120 (e.g., the processor 310) may control the motor driver 370-1 such that a torque corresponding to the torque value (e.g., $\tau_r(t)$) is output by the motor 380-1 and may control the motor driver 380-1 such that a torque corresponding to the torque value (e.g., $\tau_l(t)$) is output by the motor 380.

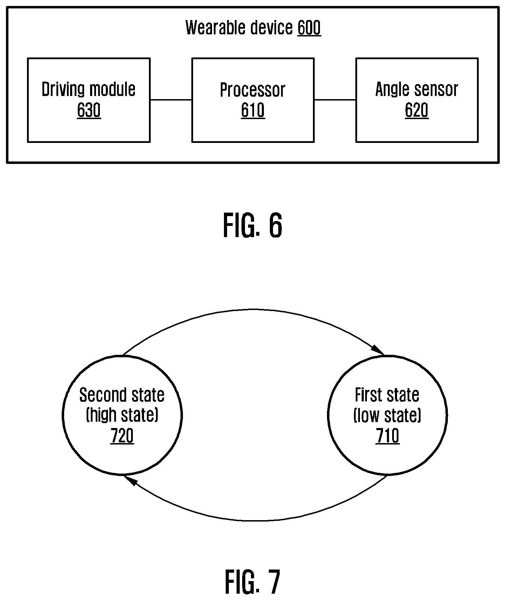

FIG. 6 is a block diagram illustrating an example of a configuration of a wearable device, according to an embodiment.

Referring to FIG. 6, according to an embodiment, a wearable device 600 (e.g., the wearable device 120, the wearable device 200, the wearable device 300, and the wearable device 300-1) may include a processor 610 (e.g., the processor 310), an angle sensor 620, and a driving module 630 (e.g., the driving module 30).

According to an embodiment, the angle sensor 620 may sense or measure a joint angle (e.g., a hip joint angle) of a user and transmit a sensing result (or measurement result) (e.g., a joint angle value) to the processor 610. For example, the angle sensor 620 may include the angle sensor 320 and/or the angle sensor 320-1. The angle sensor 320 may obtain a first joint angle value (e.g., a left hip joint angle value) by sensing the angle of a first joint (e.g., a left hip joint angle) of a user and transmit the first joint angle value to the processor 610. The angle sensor 320-1 may obtain a second joint angle value (e.g., a right hip joint angle value) by sensing a second joint (e.g., a right hip joint angle) of the user and transmit the second joint angle value to the processor 610.

According to an embodiment, the driving module 630 may include one or more motors (e.g., the motor 380 and/or the motor 380-1) and one or more motor driver circuits (e.g., the motor driver circuit 370 and/or the motor driver circuit 370-1). The driving module 630 may include the first driving module 30a and/or the second driving module 30b.

According to an embodiment, the processor 610 may obtain or collect a joint angle value (e.g., the first joint angle value and/or the second joint angle value) of the user using the angle sensor 620. The processor 610 may determine a stride time value (e.g., the value of the right stride time and/or the value of the left stride time of FIG. 5) of the user, based on the obtained joint angle value. "Based on" as used herein covers based at least on.

According to an embodiment, the processor 610 may determine a delay value (e.g., the delay value $\triangle t$) related to a delay in a torque output of the driving module 630, based on at least one of a target value, the determined stride time value, or a gain value (e.g., the gain value $\kappa$) related to the torque intensity of the driving module 630. The target value may be, for example, a value related to an ideal timing for changing a torque rotation direction of the driving module 630. The ideal timing for changing a torque rotation direction of the driving module 630 may be a timing for changing the joint rotation direction of the user. It may be ideal for the torque rotation direction of the driving module 630 to be changed when the rotation direction of the joint of the user is changed. The target value may be a value for a state in which there is no or little difference between the ideal timing for changing the torque rotation direction of the driving module 630 and the timing for changing the rotation direction of the joint of the user. The target value may be, for example, "0" but is not limited thereto. Depending on the implementation, the target value may have a value close to "0" (e.g., 0.1, etc.).

According to an embodiment, the processor 610 may control the driving module 630 such that a torque is output from the driving module 630 with a delay equivalent to the determined delay value.

According to an embodiment, the processor 610 may obtain a first joint angle value (e.g., a hip joint angle value when a hip joint is maximally open forward during a step or the minimum hip joint angle value during a step) of the user using the angle sensor 620. The processor 610 may obtain a first time value corresponding to a time point at which the first joint angle value is obtained. The processor 610 may obtain a second time value corresponding to the first torque value (e.g., 0 Newton meter (Nm)) of the driving module 630. The processor 610 may determine a value of an index (hereinafter, referred to as a "timing index (TI)") regarding a degree by which the timing for changing the torque rotation direction of the driving module 630 deviates from the timing (or the ideal timing for changing a torque rotation direction of the driving module 630) for changing the rotation direction of the hip joint of the user, based on at least one of the determined stride time value, the obtained first time value, the obtained second time value, the first torque value, or the second torque value of the driving module 630 corresponding to the obtained first time value.

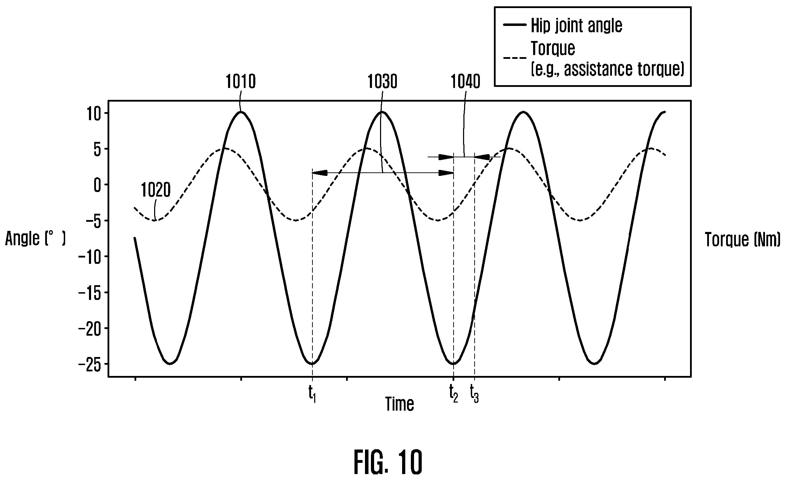

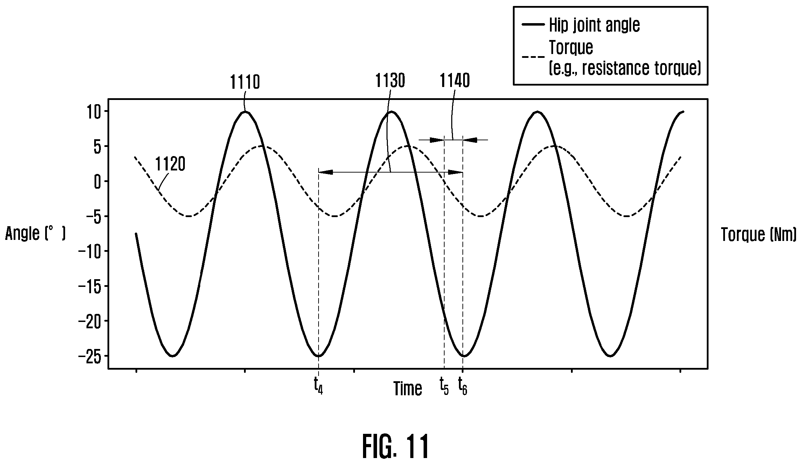

For example, the processor 610 may determine the difference value between the obtained first time value and the obtained second time value, determine the ratio value (hereinafter, referred to as a "first ratio value") between the determined difference value and the determined stride time value, and determine a value of a TI using the determined first ratio value. The processor 610 may identify a zero torque time point at the first step of the user and a time point (hereinafter, the "maximum rotation time point") at which the hip joint rotates maximally at the first step and may determine the time difference between the zero torque time point and the maximum rotation time point. The processor 610 may determine the value of the TI using the ratio value (e.g., the first ratio value) between the stride time and the determined time difference. This is described in detail with reference to FIGS. 10 and 11.

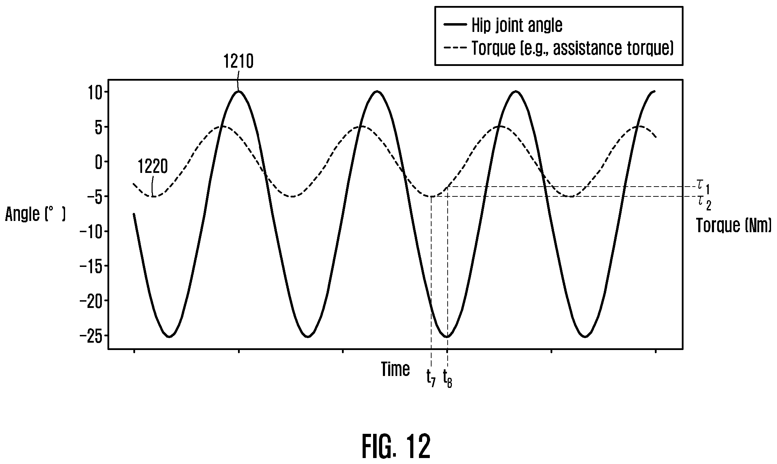

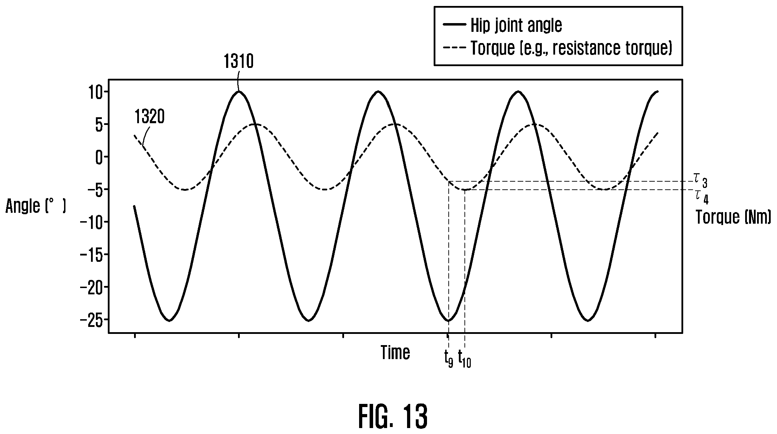

In another example, the processor 610 may determine the ratio value (hereinafter, referred to as a "second ratio value") between the first torque value and the third torque value of the driving module 630. The third torque value may be, for example, a torque value corresponding to a torque with the maximum intensity applied to the legs during the first step of the user or a torque value with the minimum intensity during the first step. The processor 610 may determine the value of the TI using the determined second ratio value. The processor 610 may identify a torque value (hereinafter, a "torque value at the time point of maximum rotation") (e.g., the first torque value) when the hip joint rotates maximally at the first step and may identify a torque value (e.g., the third torque value) corresponding to the torque with the maximum intensity of the driving module 630 at the first step. The processor 610 may determine the value of the TI using the ratio value (e.g., the second ratio value) between the torque value at the maximum rotation time point at the first step and the torque value corresponding to the torque with the maximum intensity at the first step. This is described in detail with reference to FIGS. 12 and 13.

The user may feel discomfort when the user does not receive a torque suitable for the movement of the user from the wearable device. For example, when the same delay value is used both when the walking speed of the user is fast and slow, the user may not receive a torque suitable for the movement of the user. The user may feel discomfort when receiving a torque from the wearable device at an inappropriate time. According to an embodiment, the wearable device 600 may determine a delay value at a step to be performed and provide a torque to the user, based on the determined delay value. The wearable device 600 may determine a delay value so that a TI determined at the step to be performed has a target value and may provide a torque to the user, based on the determined delay value. Accordingly, the wearable device 600 may provide a torque to the user at an appropriate timing, thereby improving user experience (UE) with the wearable device 600.

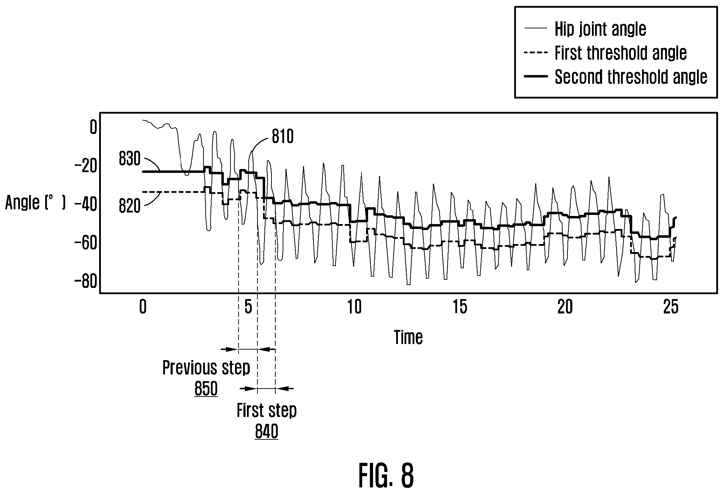

FIGS. 7 and 8 are diagrams illustrating examples of counting the number of steps of a user by a wearable device, according to an embodiment.

Referring to FIG. 7, a leg movement state (or a walking state) of a user may include a first state 710 (or a low state) and a second state 720 (or a high state). The first state 710 may include, for example, a state (or a state in which a hip joint is open less than a first level) in which the hip joint of the user rotates less than the first level. The first state 710 may include, for example, a state in which a hip joint angle value of the user is greater than a first threshold angle value (or a rising threshold angle value) (e.g., an angle value corresponding to the first level). The first threshold angle value may have a negative value, for example. As described above with reference to FIG. 5, when the hip joint rotates forward, the hip joint angle may have a negative value. When the hip joint angle value of the user is greater than the first threshold angle value, the wearable device 600 (e.g., the processor 610) may determine that the leg movement state of the user is in the first state 710. When the hip joint angle value of the user is greater than the first threshold angle value, the wearable device 600 (e.g., the processor 610) may determine that the leg movement state of the user is in the first state 710 (or a state in which the knee of the user is not raised above a predetermined level).

As the leg of the user is raised higher and higher, the hip joint angle may gradually increase in a negative direction. As the leg is raised higher and higher, the hip joint angle value may gradually decrease. The wearable device 600 (e.g., the processor 610) may determine whether the hip joint angle value of the user is less than or equal to the first threshold angle value. When determining that the hip joint angle value of the user is less than or equal to the first threshold angle value, the wearable device 600 (e.g., the processor 610) may change (or transition) the leg movement state of the user from the first state 710 to the second state 720. When a first state change condition (or a first state transition condition) (e.g., a condition in which the hip joint angle value is less than or equal to the first threshold angle value) is satisfied, the wearable device 600 (e.g., the processor 610) may determine the leg movement state of the user as the second state 720 (or a state in which the knee is raised above a predetermined level).

The second state 720 may include, for example, a state (or a state in which the hip joint is open greater than or equal to the first level) in which the hip joint of the user rotates greater than or equal to the first level. The second state 720 may include, for example, a state in which the hip joint angle value of the user is less than the first threshold angle value.

In the second state 720, the hip joint of the user may rotate forward as much as possible and then rotate in the opposite direction. When the hip joint of the user begins to rotate in the opposite direction, the hip joint angle of the user may decrease. When the hip joint of the user begins to rotate in the opposite direction, the hip joint angle value may increase. As the hip joint of the user rotates in the opposite direction, the hip joint angle of the user may gradually decrease to the second level or less. In other words, the hip joint angle value may be greater than or equal to a second threshold angle value (or a falling threshold angle value) (e.g., an angle value corresponding to the second level). When the hip joint angle value of the user is greater than or equal to the second threshold angle value, the wearable device 600 (e.g., the processor 610) may change (or transition) the leg movement state of the user from the second state 720 to the first state 710. When a second state change condition (or a second state transition condition) (e.g., a condition in which the hip joint angle value is less than or equal to the second threshold angle value) is satisfied, the wearable device 600 (e.g., the processor 610) may determine the leg movement state of the user as the first state 710 (or a state in which the knee is lowered to a predetermined level or lower).

The wearable device 600 (e.g., the processor 610) may increase the number of steps of the user by one when the leg movement state of the user changes from the first state 710 to the second state 720 and then returns to the first state 710. The wearable device 600 (e.g., the processor 610) may recognize that a step of the user occurs and increase the number of steps of the user by one when the leg movement state of the user changes from the first state 710 to the second state 720 and then returns to the first state 710. Depending on the implementation, the wearable device 600 (e.g., the processor 610) may increase the number of steps of the user by one when the leg movement state of the user changes from the second state 720 to the first state 710 and then returns to the second state 720.

The wearable device 600 (e.g., the processor 610) may check whether the leg movement state of each leg of the user changes. When the movement state of the right leg of the user changes from the first state 710 to the second state 720 and then returns to the first state 710, the wearable device 600 (e.g., the processor 610) may update (or increase) the number of steps of the user, for example, from a to a+1. When the movement state of the left leg of the user changes from the first state 710 to the second state 720 and then returns to the first state 710, the wearable device 600 (e.g., the processor 610) may update (or increase) the number of steps of the user from a+1 to a+2. The wearable device 600 (e.g., the processor 610) may accumulate the number of steps of the user through a change in the movement state of each leg of the user.

According to an embodiment, the wearable device 600 (e.g., the processor 610) may change the first threshold angle value and/or the second threshold angle value. For example, the processor 610 may change the first threshold angle value through Equation 4 below and/or change the second threshold angle value through Equation 5 below.

【Equation 4】

$$q_{high} = q_{peak} \cdot \beta + q_{base} \cdot (1 - \beta) + q_{bias}$$

【Equation 5】

$$q_{low} = q_{peak} \cdot \beta + q_{base} \cdot (1 - \beta) - q_{bias}$$

In Equation 4 and Equation 5 above, $q_{high}$ may denote the first threshold angle value (or a rising threshold angle value), $q_{low}$ may denote the second threshold angle value (or a falling threshold angle value), $q_{peak}$ may denote the hip joint angle value when the knee is raised to the highest point at the previous step, $q_{base}$ may denote the hip joint angle value when the knee is lowered to the lowest point at the previous step, and $\beta$ may denote a weight.

In Equation 4 and Equation 5 above, $q_{bias}$ may be a bias or a predetermined value. For example, at the start of exercise (e.g., walking) of the user, the first threshold angle value and the second threshold angle value may be given or set as the first value and the second value, respectively. $q_{bias}$ may denote, for example, half the difference value between the second value and the first value. $q_{bias}$ may denote, for example, half the difference value between the initial value of $q_{low}$ and the initial value of $q_{high}$.

According to an embodiment, the wearable device 600 (e.g., the processor 610) may update $q_{high}$ and/or $q_{low}$ when there is a change in the state of leg movement.

For example, the leg movement state of the first step (or current step) of the first leg may be the first state 710. In the first state 710, the processor 610 may determine (or update) the second threshold angle value based on a hip joint angle value when the knee of the first leg is raised to the highest point at the previous step of the first leg, a hip joint angle value when the knee of the first leg is lowered to the lowest point at the previous step of the first leg, a weight, and a bias. The processor 610 may sum the result (e.g., $q_{peak} \cdot \beta$) of multiplying the hip joint angle value when the knee of the first leg is raised to the highest point at the previous step of the first leg by the weight ($\beta$) and the result (e.g., $q_{base} \cdot (1 - \beta)$) of multiplying the value (e.g., $(1 - \beta)$) obtained by subtracting the weight from "1" by the hip joint angle value when the knee of the first leg is lowered to the lowest point at the previous step of the first leg. The processor 610 may determine (or update) the first threshold angle value by summing the sum result (e.g., $q_{peak} \cdot \beta + q_{base} \cdot (1 - \beta)$) and the bias. The processor 610 may determine (or update) the first threshold angle value according to Equation 4 above. The processor 610 may determine whether the leg movement state enters the second state 720 from the first state 710 by comparing the determined (or updated) first threshold angle value with the hip joint angle value.

The leg movement state of the first leg of the user may change from the first state 710 to the second state 720. In the second state 720, the processor 610 may determine (or update) the second threshold angle value, based on the hip joint angle value when the knee of the first leg is raised to the highest point at the previous step of the first leg, the hip joint angle value when the knee of the first leg is lowered to the lowest point at the previous step of the first leg, the weight, and the bias. The processor 610 may determine (or update) the first threshold angle value by subtracting the bias from the sum result (e.g., $q_{peak} \cdot \beta + q_{base} \cdot (1 - \beta)$) described above. The processor 610 may determine (or update) the second threshold angle value according to Equation 5 above. The processor 610 may determine whether the leg movement state enters the first state 710 from the second state 720 by comparing the determined (or updated) second threshold angle value with the hip joint angle value.

FIG. 8 illustrates respective examples of a graph 810 for a hip joint angle (e.g., a hip joint angle of a first leg) over time, a graph 820 for a first threshold angle value over time, and a graph 830 for a second threshold angle value over time.

In the example illustrated in FIG. 8, the wearable device 600 (e.g., the processor 610) may determine each of the first threshold angle value and the second threshold angle value at a first step 840 of the first leg, based on the maximum hip joint angle value at the previous step of the first step, the minimum hip joint angle value at the previous step of the first step, a weight, and a bias.

According to an embodiment, the wearable device 600 (e.g., the processor 610) may change the first threshold angle value and/or the second threshold angle value using external information ($q_{ext}$). For example, the processor 610 may change the first threshold angle value through Equation 6 below and/or change the second threshold angle value through Equation 7 below.

$$【Equation 6】$$

$$q_{high} = q_{ext} + q_{bias}$$

$$【Equation 7】$$

$$q_{low} = q_{ext} - q_{bias}$$

In Equation 6 and Equation 7 above, $q_{ext}$ may denote external information. The external information may include, for example, information obtained from a sensor (e.g., the IMU 360, etc.) related to a walking environment.

According to an embodiment, the processor 610 may determine the first threshold angle value ($q_{high\_rignt}$) for the right leg by summing the external information ($q_{ext}$) (e.g., a left hip joint angle value or sensor data obtained by the IMU 360, etc.) and the bias ($q_{bias}$). The processor 610 may determine the second threshold angle value ($q_{low\_rignt}$) for the right leg by subtracting the bias ($q_{bias}$) from the external information ($q_{ext}$) (e.g., a left hip joint angle value, the sensor data obtained by the IMU 360, etc.). The processor 610 may determine the first threshold angle value ($q_{high\_left}$) for the left leg by summing the external information ($q_{ext}$) (e.g., the right hip joint angle value, the sensor data obtained by the IMU 360, etc.) and the bias ($q_{bias}$). The processor 610 may determine the second threshold angle value ($q_{low\_left}$) for the left leg by subtracting the bias ($q_{bias}$) from the external information ($q_{ext}$) (e.g., the right hip joint angle value, the sensor data obtained by the IMU 360, etc.).

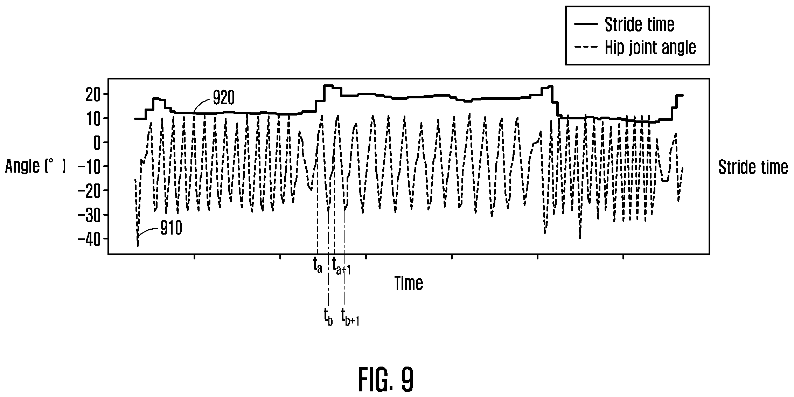

FIG. 9 is a diagram illustrating an example of determining a stride time of a user by a wearable device, according to an embodiment.

FIG. 9 illustrates a graph 910 for a hip joint angle (e.g., a right hip joint angle) over time and a graph 920 for a stride time (e.g., a right stride time) over time.

According to an embodiment, the wearable device 600 (e.g., the processor 610) may determine a stride time value of a user, based on at least one hip joint angle value of the user.

For example, the processor 610 may detect that the movement state of the right leg of the user changes from the first state 710 to the second state 720 and that the movement state of the right leg is back to the first state 710 from the second state 720. In this case, the processor 610 may increase the number of right steps and identify or record a time value

(e.g., $t_a$ of FIG. 9) when the number of right steps is increased.

The processor 610 may detect that the movement state of the right leg of the user changes again from the first state 710 to the second state 720 and that the movement state of the right leg changes again from the second state 720 to the first state 710. In this case, the processor 610 may identify or record a time value (e.g., $t_{a+1}$ of FIG. 9) when the number of right steps is increased again. The processor 610 may determine a stride time value (e.g., the difference value between $t_{a+1}$ and $t_a$) of the right leg (or one step of the right leg) using a time value (e.g., $t_{a+1}$) and a time value (e.g., $t_a$). The processor 610 may determine the stride time value (e.g., the difference value between $t_{a+1}$ and $t_a$) of the right leg (or a first step) using the time value (e.g., $t_{a+1}$) when the first step of the right leg occurs and the time value (e.g., $t_a$) when the previous step of the right leg occurs. Depending on the implementation, the processor 610 may determine, as the stride time value (e.g., the stride time value of the first step) of the right leg, the difference value between a time value (e.g., $t_{b+1}$ of FIG. 9) when the right hip joint rotates maximally during the first step of the right leg and a time value (e.g., $t_b$ of FIG. 9) when the right hip joint rotates maximally during the previous step.

Similar to the embodiment of determining the stride time value of the right leg, the processor 610 may determine the stride time value of the left leg. The processor 610 may determine, as the stride time value of the user, the average value between the stride time value of the left leg and the stride time value of the right leg. Depending on the implementation, the processor 610 may determine, as the stride time value of the user, either the stride time value of the left leg or the stride time value of the right leg.

Referring to the graph 910 and the graph 920 illustrated in FIG. 9, when a walking speed is fast, the stride time may decrease, and when the walking speed is slow, the stride time may increase.

FIGS. 10 and 11 are diagrams illustrating examples of a TI of a wearable device, according to an embodiment.

According to an embodiment, the wearable device 600 (e.g., the processor 610) may obtain a first joint angle value of the user using the angle sensor 620. The first joint angle value may correspond, for example, to the hip joint angle value when the hip joint rotates as far forward as possible during a step of the user or to the minimum hip joint angle value during the step. The wearable device 600 (e.g., the processor 610) may obtain a first time value corresponding to a time point at which the first joint angle value is obtained.

According to an embodiment, the wearable device 600 (e.g., the processor 610) may obtain a second time value corresponding to the first torque value of the driving module 630. The first torque value may be, for example, "0" but is not limited thereto.

According to an embodiment, the wearable device 600 (e.g., the processor 610) may determine a value of a TI (e.g., a first TI) using the stride time value, the first time value, and a second time value.

According to an embodiment, the processor 610 may determine the difference value between the first time value and the second time value. The processor 610 may determine a first ratio value between the determined difference value and the stride time value. The processor 610 may determine a value of the TI (e.g., the first TI) using the determined first ratio value.

For example, the processor 610 may determine the value of the first TI by applying the first value (e.g., 1) to the first ratio value when the first time value is less than or equal to the second time value. The processor 610 may determine the first TI value by applying the second value (e.g., -1) to the first ratio value when the first time value is greater than the second time value. The processor 610 may determine the value of the first TI through Equation 8 below.

【Equation 8】

$$\text{First TI} = \begin{cases} \dfrac{\text{Time interval A}}{\text{Time interval B}} \times 1 & \text{if first time value } \leq \text{ second time value} \\ \dfrac{\text{Time interval A}}{\text{Time interval B}} \times \text{-}1 & \text{if first time value } > \text{ second time value} \end{cases}$$

In Equation 8 above, a time interval A may indicate the difference value between the first time value and the second time value, and a time interval B may indicate a stride time value. The time interval B may indicate the difference value between the first time value and the time value when the knee is raised to the highest point at the previous step.

FIG. 10 illustrates respective examples of a graph 1010 for a hip joint angle (e.g., a right hip joint angle) over time and a graph 1020 for a torque (e.g., an assistance torque) over time. The graph 1020 may be based on Equation 2 above, for example.

In the example illustrated in FIG. 10, the wearable device 600 may obtain a first time value (e.g., $t_2$) and a second time value (e.g., $t_3$) and determine a time interval A 1040 (e.g., $t_3$- $t_2$) of Equation 8 above. The wearable device 600 may obtain a time interval B 1030 (e.g., $t_2$-$t_1$). The time value $t_1$ may denote, for example, the time value when the right knee is raised to the highest point at the previous step of the right leg. The time interval B 1030 may correspond to, for example, a stride time value (e.g., a stride time value of a right step).

In the example illustrated in FIG. 10, the second time value (e.g., $t_3$) may be greater than the first time value (e.g.,

$t_2$), so the wearable device 600 may determine the value of the TI (e.g., the first TI) by multiplying "time interval A/time interval B" (e.g., $(t_3-t_2)/(t_2-t_1)$) by the first value (e.g., 1). The wearable device 600 may determine the value of the TI (e.g., the first TI) by multiplying "time interval A/time interval B" (e.g., $(t_3-t_2)/(t_2-t_1)$) by the first value (e.g., 1) when the time point at which the hip joint rotates forward to the maximum is earlier than the time point of a zero torque value.

FIG. 11 illustrates respective examples of a graph 1110 for a hip joint angle (e.g., a right hip joint angle) over time and a graph 1120 for a torque (e.g., a resistance torque) over time. The graph 1120 may be based on Equation 2 above, for example.

In the example illustrated in FIG. 11, the wearable device 600 may obtain a first time value (e.g., $t_6$) and a second time value (e.g., $t_5$) and determine a time interval A 1140 (e.g., $t_6-t_5$) of Equation 8 above. The wearable device 600 may obtain a time interval B 1130 (e.g., $t_5-t_4$). The time value $t_4$ may denote, for example, the time value when the right knee is raised to the highest point at the previous step of the right leg. The time interval B 1130 may correspond to, for example, a stride time value (e.g., a stride time value of a right step).

In the example illustrated in FIG. 11, the second time value (e.g., $t_5$) may be less than the first time value (e.g., $t_4$), so the wearable device 600 may determine the value of the TI (e.g., the first TI) by multiplying "time interval A/time interval B" (e.g., $(t_6-t_5)/(t_5-t_4)$) by the second value (e.g., -1). The wearable device 600 may determine the value of the TI (e.g., the first TI) by multiplying "time interval A/time interval B" (e.g., $(t_6-t_5)/(t_5-t_4)$) by the second value (e.g., -1) when the time point of the zero torque value is earlier than the time point at which the hip joint rotates forward to the maximum.

FIGS. 12 and 13 are diagrams illustrating other examples of a TI of a wearable device, according to an embodiment.

According to an embodiment, the wearable device 600 (e.g., the processor 610) may obtain a first joint angle value of a user using the angle sensor 620. The first joint angle value may correspond, for example, to the hip joint angle value when a hip joint rotates as far forward as possible during a step of the user or to the minimum hip joint angle value during the step. The wearable device 600 (e.g., the processor 610) may obtain a first time value corresponding to a time point at which the first joint angle value is obtained.

According to an embodiment, the wearable device 600 (e.g., the processor 610) may obtain a third torque value. The third torque value may correspond to, for example, the maximum intensity value of a torque applied to a leg rotating forward during one step of the user or the minimum torque value during one step. The wearable device 600 (e.g., the processor 610) may obtain a time value (hereinafter, referred to as a "third time value") corresponding to the third torque value.

According to an embodiment, the wearable device 600 (e.g., the processor 610) may determine a value of a TI (e.g., a second TI) using the first time value, the third time value, the first torque value, and the third torque value.

According to an embodiment, the processor 610 may determine a second ratio value between the first torque value and the third torque value and determine the value of the TI (e.g., the second TI) using the determined second ratio value.

For example, the processor 610 may determine the value of the second TI by applying the first value (e.g., 1) to the second ratio value when the first time value is greater than the third time value. The processor 610 may determine the value of the second TI by applying the second value (e.g., -1) to the second ratio value when the first time value is less than or equal to the third time value. The processor 610 may determine the value of the second TI through Equation 9 below.

【Equation 9】

$$\text{Second TI} = \begin{cases} \dfrac{\text{Torque A}}{\text{Torque B}} \times 1 & \text{if first time value} > \text{third time value} \\ \dfrac{\text{Torque A}}{\text{Torque B}} \times \text{-1} & \text{if first time value} \leq \text{third time value} \end{cases}$$

In above Equation 9, a torque A may indicate the first torque value and a torque B may indicate the third torque value.

FIG. 12 illustrates respective examples of a graph 1210 for a hip joint angle (e.g., a right hip joint angle) over time and a graph 1220 for a torque (e.g., an assistance torque) over time. The graph 1220 may be based on Equation 2 above, for example.

In the example illustrated in FIG. 12, the wearable device 600 may obtain a first time value (e.g., $t_8$) and obtain a first torque value (e.g., $\tau_1$) corresponding to the first time value (e.g., $t_8$). The wearable device 600 may obtain a third torque value (e.g., $\tau_2$) and obtain a third time value (e.g., $t_7$) corresponding to the third torque value (e.g., $\tau_2$).

In the example illustrated in FIG. 12, the first time value (e.g., $t_8$) may be greater than the third time value (e.g., $t_7$), so the wearable device 600 may determine the value of the TI (e.g., the second TI) by multiplying "torque A/torque B" (e.g., $\tau_1/\tau_2$) by the first value (e.g., 1).

FIG. 13 illustrates respective examples of a graph 1310 for a joint angle (e.g., a right hip joint angle) over time and a graph 1320 for a torque (e.g., a resistance torque) over time. The graph 1320 may be based on Equation 2 above, for example.

In the example illustrated in FIG. 13, the wearable device 600 may obtain a first time value (e.g., $t_9$) and obtain a first torque value (e.g., $\tau_3$) corresponding to the first time value (e.g., $t_9$). The wearable device 600 may obtain a third torque value (e.g., $\tau_4$) and obtain a third time value (e.g., $t_{10}$) corresponding to the third torque value (e.g., $\tau_4$).

In the example illustrated in FIG. 13, the first time value (e.g., $t_9$) may be less than or equal to a third time value (e.g., $t_{10}$), so the wearable device 600 may determine the value of the TI (e.g., the second TI) by multiplying "torque A/torque B" (e.g., $\tau_3/\tau_4$) by the second value (e.g., -1).

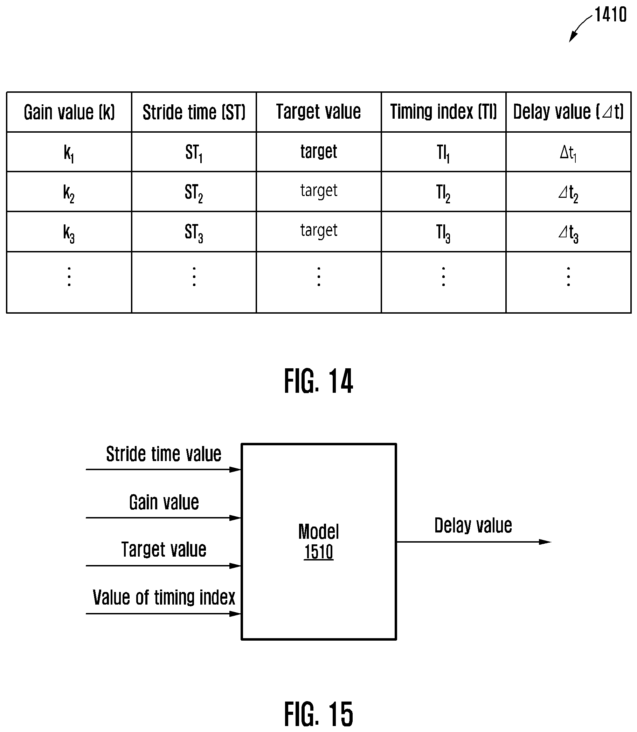

FIGS. 14 and 15 are diagrams illustrating examples of determining a delay value by a wearable device, according to an embodiment.

FIG. 14 illustrates a table 1410 in which gain values, stride times, target values, TIs (e.g., the first TI or the second TI), and delay values are recorded. The table 1410 may be stored, for example, in the memory 350.

According to an embodiment, delay values respectively corresponding to a plurality of combinations may be recorded in the table 1410. Each of the plurality of combinations may include each of a plurality of gain values, each of a plurality of stride time values, each of a plurality of target values, and each of a plurality of TI values. For example, in the example illustrated in FIG. 14, a first combination including a gain value $\kappa_1$, a stride time value $T_1$, a target value (target), and a value $TI_1$ of a TI may correspond to a delay value $\triangle t_1$. A second combination including a gain value $\kappa_2$, a stride time value $T_2$, a target value (target), and a value $TI_2$ of a TI may correspond to a delay value $\triangle t_2$.

According to an embodiment, the wearable device 600 (e.g., the processor 610) may determine a delay value, based on a gain value, a stride time value, a target value, a value of a TI (e.g., the first TI or the second TI), and the table 1410. For example, when a gain value is $\kappa_1$ of FIG. 14, a stride time value is $ST_1$ of FIG. 14, a target value is the target of FIG. 14, and a TI is $TI_1$ of FIG. 14, the processor 610 may find the delay value $\triangle t_1$ mapped to $\kappa_1/ST_1/target/TI_1$ in the table 1410.

According to an embodiment, the processor 610 may obtain, from the table 1410, a delay value corresponding to a combination including a gain value, a target value, a stride time value determined for each step, and a value of a TI determined for each step. The processor 610 may repeatedly obtain a delay value, and as time passes, the delay value may approach a target value. The processor 610 may obtain the delay value approaching the target value by repeatedly performing an operation of obtaining a delay value.

FIG. 15 illustrates a model 1510. The model 1510 may be a model modeled based on, for example, various stride time values, various gain values, various delay values, and various TI values. The model 1510 may be a statistical model and/or a machine learning model. The model 1510 may be stored in the memory 350.

According to an embodiment, the wearable device 600 (e.g., the processor 610) may determine a delay value, based on a gain value, a stride time value, a target value, a value of a TI (e.g., the first TI or the second TI), and the model 1510. For example, the processor 610 may input, to the model 1510, a gain value, a stride time value, a target value, and a value of a TI and obtain a delay value from the model 1510. The processor 610 may input, to the model 1510, a gain value, a target value, a stride time value determined for each step, and a value of a TI determined for each step and obtain, from the model 1510, an output (e.g., a delay value) corresponding to the input. The processor 610 may repeatedly obtain a delay value from the model 1510, and the delay value may approach the target value over time. The processor 610 may obtain the delay value approaching the target value by repeatedly performing an operation of obtaining a delay value.

Depending on the implementation, the processor 610 may input a gain value, a stride time value, and a target value to the model 1510 and obtain a delay value from the model 1510.

According to an embodiment, unlike the examples illustrated in FIGS. 14 and 15, the wearable device 600 (e.g., the processor 610) may determine a delay value through a control algorithm (e.g., a proportional-integral-differential (PID) control algorithm). For example, the processor 610 may use the PID control algorithm to ensure that a TI has a target value.

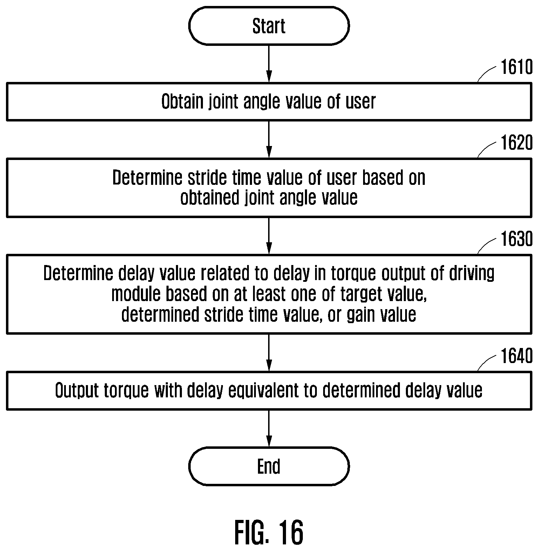

FIG. 16 is a flowchart illustrating a method of operating a wearable device, according to an embodiment.

In operation 1610, the wearable device 600 may obtain a joint angle value of a user.

In operation 1620, the wearable device 600 may determine a stride time value of the user, based on the obtained joint angle value.

In operation 1630, the wearable device 600 may determine a delay value related to a delay in a torque output of the driving module 630, based on at least one of a target value, a determined stride time value, or a gain value.

In operation 1640, the wearable device 600 may output a torque (e.g., an assistance torque or a resistance torque) with a delay equivalent to the determined delay value.

The embodiments described with reference to FIGS. 1A to 15 may apply to the method of operating a wearable device of FIG. 16.

According to an embodiment, a wearable device 120, 200, 300, 300-1, 600 may include a driving module 630, an angle sensor 620, and a processor 610. The processor may obtain a joint angle value of a user using the angle sensor. The processor may determine a stride time value of the user, based on the obtained joint angle value. The processor may determine the delay value related to the delay in the torque output of the driving module, based on at least one of a target value related to an ideal timing for changing a torque rotation direction of the driving module, the determined stride time value, or a gain value related to the torque intensity of the driving module. The processor may control the driving module so that the torque is output from the driving module with a delay equivalent to the determined delay value.

According to an embodiment, the processor may obtain a first joint angle value of the user using the angle sensor, obtain a first time value corresponding to a time point at which the first joint angle value is obtained, obtain a second time value corresponding to a first torque value of the driving module, and determine a value of a TI (e.g., the TI described above) related to a degree to which the timing for changing the torque rotation direction of the driving module deviates from a timing for changing a joint rotation direction of the user based on at least one of the determined stride time value, the obtained first time value, the obtained second time value, the first torque value, or a second torque value of the driving module corresponding to the obtained first time value.

According to an embodiment, the processor may determine a difference value between the obtained first time value and the obtained second time value, determine a first ratio value between the determined difference value and the determined stride time value, and determine a value of the index (e.g., the first TI).

According to an embodiment, the processor may determine a value of the index by applying a first value (e.g., 1) to the determined first ratio value when the first time value is less than or equal to the second time value and determine the value of the index by applying a second value (e.g., -1) to the determined first ratio value when the first time value is greater than the second time value.

According to an embodiment, the processor may obtain a third torque value of the driving module, determine a second ratio value between the first torque value and the third torque value, and determine a value of the index (e.g., the second TI) using the determined second ratio value.

According to an embodiment, the processor may determine the value of the index by applying the first value to the determined second ratio value when the first time value is greater than a third time value corresponding to the third torque value and determine the value of the index by applying the second value to the determined second ratio value when the first time value is less than or equal to the third time value.

According to an embodiment, the processor may determine the delay value such that the index has the target value.

According to an embodiment, the processor may input the determined stride time value, the gain value, and the target value to the model and determine the delay value through the model.

According to an embodiment, the processor may obtain, from a table stored in a memory of the wearable device, the delay value corresponding to the determined stride time value, the gain value, the target value, and the determined value of the index.

According to an embodiment, the processor may obtain the joint angle value in a second state after a movement state of a leg of the user changes from a first state to the second state and increase the number of steps of the user when it is detected that the movement state changes from the second state to the first state using the obtained joint angle value. The second state may include a state in which the hip joint of the leg rotates to a first level or more, and the first state may include a state in which the hip joint rotates to a second level or less.

According to an embodiment, the processor may determine the first level and the second level using a hip joint angle value when the knee of the leg is raised to the highest point at a previous step of the leg, a hip joint angle value when the knee of the leg is lowered to the lowest point at the previous step, a weight, and a bias.

The processor may identify a time value when the number of steps of the user is increased and determine a stride time value of the user using the identified time value and a time value when the previous step of the leg occurs.

According to an embodiment, a method of operating a wearable device 120, 200, 300, 300-1, 600 may include obtaining a joint angle value of a user, determining a stride time value of the user, based on the obtained joint angle value, determining a delay value related to a delay in a torque output of a driving module 630, based on at least one of a target value related to an ideal timing for changing a torque rotation direction of the driving module of the wearable device, the determined stride time value, or a gain value related to a torque intensity of the driving module, and outputting a torque with a delay equivalent to the determined delay value.

According to an embodiment, the method may further include obtaining a first joint angle value of the user, obtaining a first time value corresponding to a time point at which the first joint angle value is obtained, obtaining a second time value corresponding to a first torque value of the driving module, and determining, based on at least one of the determined stride time value, the obtained first time value, the obtained second time value, the first torque value, or a second torque value of the driving module corresponding to the obtained first time value, a value of an index related to a degree to which a timing for changing the torque rotation direction of the driving module deviates from a timing for changing a joint rotation direction of the user.

Each embodiment herein may be used in combination with any other embodiment(s) described herein.

According to an embodiment, the determining of the value of the index may include determining a difference value between the obtained first time value and the obtained second time value, determining a first ratio value between the determined difference value and the determined stride time value, and determining the value of the index using the determined first ratio value.

According to an embodiment, the determining of the value of the index using the determined first ratio value may include determining the value of the index by applying a first value to the determined first ratio value when the first time value is less than or equal to the second time value and determining the value of the index by applying a second value to the determined first ratio value when the first time value is greater than the second time value.

According to an embodiment, the determining of the value of the index may include obtaining a third torque value of the driving module, determining a second ratio value between the first torque value and the third torque value, and determining the value of the index using the determined second ratio value.

According to an embodiment, the determining of the value of the index using the determined second ratio value may include determining the value of the index by applying a first value to the determined second ratio value when the first time value is greater than a third time value corresponding to the third torque value and determining the value of the index by applying a second value to the determined second ratio value when the first time value is less than or equal to the third time value.

According to an embodiment, the determining of the delay value may include determining the delay value such that the index has the target value.

According to an embodiment, the obtaining of the joint angle value may include obtaining the joint angle value in a second state after a movement state of a leg of the user changes from a first state to the second state. The method may further include increasing the number of steps of the user when it is detected that the movement state changes from the second state to the first state using the obtained joint angle value.

The second state may include a state in which the hip joint of the leg rotates to a first level or more, and the first state may include a state in which the hip joint rotates to a second level or less.

The embodiments described herein may be implemented using a hardware component, a software component, and/or a combination thereof. A processing device, comprising processing circuitry, may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is singular; however, one of ordinary skill in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or one or more combinations thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents of the claims are within the scope of the following claims.

**Claims**

1. A wearable device (120, 200, 300, 300-1, 600) comprising:

   a driving module (630) comprising a motor and/or circuitry;
   an angle sensor (620); and
   a processor (610), comprising processing circuitry, configured to:

   obtain a joint angle value of a user via the angle sensor,
   determine a stride time value of the user, based on the obtained joint angle value, determine a delay value related to a delay in a torque output of the driving module, based on at least one of a target value related to an ideal timing for changing a torque rotation direction of the driving module, the determined stride time value, or a gain value related to a torque intensity of the driving module, and
   control the driving module so that a torque is delayed by the determined delay value and output from the driving module.

2. The wearable device of claim 1, wherein the processor is configured to obtain a first joint angle value of the user via at least the angle sensor, obtain a first time value corresponding to a time point at which the first joint angle value is obtained, obtain a second time value corresponding to a first torque value of the driving module, and determine a value of an index related to a degree to which the ideal timing for changing the torque rotation direction of the driving module deviates from a timing for changing a joint rotation direction of the user based on at least one of the determined stride time value, the obtained first time value, the obtained second time value, the first torque value, or a second torque value of the driving module corresponding to the obtained first time value.

3. The wearable device of claim 2, wherein the processor is configured to determine a difference value between the obtained first time value and the obtained second time value, determine a first ratio value between the determined difference value and the determined stride time value, and determine the value of the index based on at least the determined first ratio value.

4. The wearable device of claim 3, wherein the processor is configured to determine the value of the index at least by applying a first value to the determined first ratio value when the first time value is less than or equal to the second time value, and determine the value of the index at least by applying a second value to the determined first ratio value when the first time value is greater than the second time value.

5. The wearable device of claim 2, wherein the processor is configured to obtain a third torque value of the driving module, determine a second ratio value between the first torque value and the third torque value, and determine a value of the index based on the determined second ratio value.

6. The wearable device of claim 5, wherein the processor is configured to determine the value of the index at least by applying a first value to the determined second ratio value when the first time value is greater than a third time value corresponding to the third torque value, and determine the value of the index at least by applying a second value to the determined second ratio value when the first time value is less than or equal to the third time value.

7. The wearable device of claim 2, wherein the processor is configured to determine the delay value such that the index has the target value.

8. The wearable device of claim 1, wherein the processor is configured to input the determined stride time value, the gain value, and the targe value to a model and determine the delay value via at least the model.

9. The wearable device of claim 2, wherein the processor is configured to obtain, from a table stored in a memory of the wearable device, a delay value corresponding to the determined stride time value, the gain value, the target value, and the determined value of the index.

10. The wearable device of claim 1, wherein

    the processor is configured to obtain the joint angle value in a second state after a movement state of a leg of the user changes from a first state to the second state and increase a number of steps of the user when it is detected that the movement state changes from the second state to the first state based on the obtained joint angle value, wherein
the second state comprises a state in which a hip joint of the leg rotates to a first degree or more, and the first state comprises a state in which the hip joint rotates to a second degree or less.

11. The wearable device of claim 10, wherein the processor is configured to determine the first degree and the second degree based on a hip joint angle value when a knee of the leg is raised to a highest point at a previous step of the leg, a hip joint angle value when the knee of the leg is lowered to a lowest point at the previous step, a weight, and a bias.

12. The wearable device of claim 10, wherein the processor is configured to identify a time value when a number of steps of the user is increased and determine a stride time value of the user based on a time value when the previous step of the leg occurs.

13. A method of operating a wearable device (120, 200, 300, 300-1, 600), the method comprising:

obtaining a joint angle value of a user;
determining a stride time value of the user, based on the obtained joint angle value; determining a delay value related to a delay of a torque output of a driving module (630), based on at least one of a target value related to an ideal timing for changing a torque rotation direction of the driving module, the determined stride time value, or a gain value related to a torque intensity of the driving module; and
outputting a torque by delaying the torque by the determined delay value.

14. The method of claim 13, further comprising:

obtaining a first joint angle value of the user;
obtaining a first time value corresponding to a time point at which the first joint angle value is obtained;
obtaining a second time value corresponding to a first torque value of the driving module;
determining, based on at least one of the determined stride time value, the obtained first time value, the obtained second time value, the first torque value, or a second torque value of the driving module corresponding to the obtained first time value, a value of an index related to a degree to which a timing for changing the torque rotation direction of the driving module deviates from a timing for changing a joint rotation direction of the user.

15. The method of claim 14, wherein the determining of the value of the index comprises:

determining a difference value between the obtained first time value and the obtained second time value;
determining a first ratio value between the determined difference value and the determined stride time value; and
determining a value of the index based on the determined first ratio value.

120

FIG. 1A

FIG. 1B

FIG. 2A

FIG. 2B

300

Battery <u>330</u>

PMIC <u>340</u>

Memory <u>350</u>

Communication module <u>390</u>

Motor driver circuit <u>370</u>

Processor <u>310</u>

Motor driver circuit <u>370-1</u>

Motor <u>380</u>

Angle sensor <u>320</u>

IMU <u>360</u>

Angle sensor <u>320-1</u>

Motor <u>380-1</u>

FIG. 3A

300-1

FIG. 3B

y

FIG. 4

FIG. 5

Wearable device 600

Driving module
630

Processor
610

Angle sensor
620

FIG. 6

Second state
(high state)
720

First state
(low state)
710

FIG. 7

Angle [°]

Hip joint angle
First threshold angle
Second threshold angle

810
830
820

Previous step 850
First step 840

Time

FIG. 8

FIG. 9

FIG. 10

FIG. 11

FIG. 12

FIG. 13

1410

| Gain value (k) | Stride time (ST) | Target value | Timing index (TI) | Delay value ($\Delta$t) |
|---|---|---|---|---|
| $k_1$ | $ST_1$ | target | $TI_1$ | $\Delta t_1$ |
| $k_2$ | $ST_2$ | target | $TI_2$ | $\Delta t_2$ |
| $k_3$ | $ST_3$ | target | $TI_3$ | $\Delta t_3$ |
| $\vdots$ | $\vdots$ | $\vdots$ | $\vdots$ | $\vdots$ |

## FIG. 14

Stride time value →

Gain value →

Target value →

Value of timing index →

Model
1510

→ Delay value

## FIG. 15

```
                    ┌─────────────────┐
                    │      Start      │
                    └─────────────────┘
                             │
                             ▼                              1610
        ┌────────────────────────────────────────────────┐
        │          Obtain joint angle value of user       │
        └────────────────────────────────────────────────┘
                             │
                             ▼                              1620
        ┌────────────────────────────────────────────────┐
        │      Determine stride time value of user based on│
        │             obtained joint angle value          │
        └────────────────────────────────────────────────┘
                             │
                             ▼                              1630
        ┌────────────────────────────────────────────────┐
        │ Determine delay value related to delay in torque output of driving │
        │          module based on at least one of target value,              │
        │            determined stride time value, or gain value              │
        └────────────────────────────────────────────────┘
                             │
                             ▼                              1640
        ┌────────────────────────────────────────────────┐
        │ Output torque with delay equivalent to determined delay value │
        └────────────────────────────────────────────────┘
                             │
                             ▼
                    ┌─────────────────┐
                    │       End       │
                    └─────────────────┘
```

FIG. 16

## INTERNATIONAL SEARCH REPORT

| | International application No. |
|---|---|
| | **PCT/KR2024/021172** |

| A. | CLASSIFICATION OF SUBJECT MATTER |
|---|---|

**B25J 9/00**(2006.01)i; **B25J 9/16**(2006.01)i

According to International Patent Classification (IPC) or to both national classification and IPC

| B. | FIELDS SEARCHED |
|---|---|

Minimum documentation searched (classification system followed by classification symbols)

B25J 9/00(2006.01); A61B 5/00(2006.01); A61B 5/107(2006.01); A61B 5/11(2006.01); A61H 1/02(2006.01); A61H 3/00(2006.01); A63B 24/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 웨어러블 장치(wearable device), 각도 센서(angle sensor), 관절 각도(joint angle), 보폭 시간(stride time), 토크(torque), 지연값(delay value)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2018-0136656 A (SAMSUNG ELECTRONICS CO., LTD.) 26 December 2018 (2018-12-26)<br>See paragraphs [0050]-[0064] and figure 1. | 1,8,10-13 |
| A | | 2-7,9,14,15 |
| Y | US 2024-0009519 A1 (SAMSUNG ELECTRONICS CO., LTD.) 11 January 2024 (2024-01-11)<br>See paragraphs [0115] and [0138]. | 1,8,10-13 |
| A | KR 10-2015-0077413 A (PRESIDENT AND FELLOWS OF HARVARD COLLEGE) 07 July 2015 (2015-07-07)<br>See claims 18, 22 and 23 and figure 1. | 1-15 |
| A | KR 10-2020-0085083 A (SAMSUNG ELECTRONICS CO., LTD.) 14 July 2020 (2020-07-14)<br>See claims 1 and 13 and figure 3. | 1-15 |

| ✓ | Further documents are listed in the continuation of Box C. | ✓ | See patent family annex. |
|---|---|---|---|

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 March 2025** | **26 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/021172** |

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0165172 A (SAMSUNG ELECTRONICS CO., LTD.) 14 December 2022 (2022-12-14)<br>See claims 1 and 6 and figure 7a. | 1-15 |

Form PCT/ISA/210 (second sheet) (July 2022)

## INTERNATIONAL SEARCH REPORT
### Information on patent family members

International application No.

**PCT/KR2024/021172**

| Patent document cited in search report | | | Publication date (day/month/year) | Patent family member(s) | | | Publication date (day/month/year) |
|---|---|---|---|---|---|---|---|
| KR | 10-2018-0136656 | A | 26 December 2018 | KR | 10-2023-0042231 | A | 28 March 2023 |
| | | | | KR | 10-2023-0118050 | A | 10 August 2023 |
| | | | | KR | 10-2024-0052919 | A | 23 April 2024 |
| | | | | KR | 10-2024-0052920 | A | 23 April 2024 |
| | | | | KR | 10-2024-0136270 | A | 13 September 2024 |
| | | | | KR | 10-2510874 | B1 | 16 March 2023 |
| | | | | KR | 10-2608432 | B1 | 30 November 2023 |
| | | | | KR | 10-2682900 | B1 | 08 July 2024 |
| | | | | KR | 10-2682903 | B1 | 08 July 2024 |
| | | | | KR | 10-2703343 | B1 | 06 September 2024 |
| | | | | US | 11109778 | B2 | 07 September 2021 |
| | | | | US | 2018-0360347 | A1 | 20 December 2018 |
| | | | | US | 2021-0353177 | A1 | 18 November 2021 |
| US | 2024-0009519 | A1 | 11 January 2024 | EP | 4336512 | A1 | 13 March 2024 |
| | | | | EP | 4336512 | A4 | 11 September 2024 |
| | | | | WO | 2023-063803 | A1 | 20 April 2023 |
| KR | 10-2015-0077413 | A | 07 July 2015 | CA | 2885228 | A1 | 17 July 2014 |
| | | | | CA | 2885228 | C | 20 July 2021 |
| | | | | CN | 104869969 | A | 26 August 2015 |
| | | | | CN | 104869969 | B | 09 June 2017 |
| | | | | EP | 2895133 | A1 | 22 July 2015 |
| | | | | EP | 2895133 | A4 | 05 October 2016 |
| | | | | EP | 2895133 | B1 | 17 June 2020 |
| | | | | EP | 3791834 | A2 | 17 March 2021 |
| | | | | EP | 3791834 | A3 | 02 June 2021 |
| | | | | JP | 2015-529574 | A | 08 October 2015 |
| | | | | JP | 2019-077037 | A | 23 May 2019 |
| | | | | JP | 6889187 | B2 | 18 June 2021 |
| | | | | US | 10427293 | B2 | 01 October 2019 |
| | | | | US | 11464700 | B2 | 11 October 2022 |
| | | | | US | 2015-0173993 | A1 | 25 June 2015 |
| | | | | US | 2015-0321339 | A1 | 12 November 2015 |
| | | | | US | 2016-0220438 | A1 | 04 August 2016 |
| | | | | US | 2024-0225940 | A1 | 11 July 2024 |
| | | | | US | 9351900 | B2 | 31 May 2016 |
| | | | | WO | 2014-109799 | A1 | 17 July 2014 |
| KR | 10-2020-0085083 | A | 14 July 2020 | CN | 111407603 | A | 14 July 2020 |
| | | | | CN | 111407603 | B | 08 November 2024 |
| | | | | EP | 3677237 | A1 | 08 July 2020 |
| | | | | EP | 3677237 | B1 | 06 April 2022 |
| | | | | EP | 4082505 | A1 | 02 November 2022 |
| | | | | KR | 10-2701449 | B1 | 03 September 2024 |
| | | | | US | 11590048 | B2 | 28 February 2023 |
| | | | | US | 2020-0214925 | A1 | 09 July 2020 |
| | | | | US | 2023-0172786 | A1 | 08 June 2023 |
| KR | 10-2022-0165172 | A | 14 December 2022 | | None | | |

Form PCT/ISA/210 (patent family annex) (July 2022)